(19) Europäisches Patentamt
European Patent Office
Office européen des brevets

(11) **EP 4 583 007 A2**

(12) **EUROPEAN PATENT APPLICATION**

(43) Date of publication:
**09.07.2025 Bulletin 2025/28**

(21) Application number: **24222807.0**

(22) Date of filing: **28.01.2021**

(51) International Patent Classification (IPC):
**G06N 3/098** (2023.01)

(52) Cooperative Patent Classification (CPC):
**G06F 17/16; G06N 3/063; G06N 3/098; G06N 3/10**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2020 CN 202010231450**

(62) Document number(s) of the earlier application(s) in accordance with Art. 76 EPC:
**21776526.2 / 4 123 515**

(71) Applicant: **Huawei Technologies Co., Ltd.**
**Shenzhen, Guangdong 518129 (CN)**

(72) Inventors:
• **SU, Teng**
**Shenzhen, 518129 (CN)**
• **CHEN, Tingting**
**Shenzhen, 518129 (CN)**

• **YANG, Zhenzhang**
**Shenzhen, 518129 (CN)**
• **ZHANG, Xiaoda**
**Shenzhen, 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

Remarks:
•This application was filed on 23-12-2024 as a divisional application to the application mentioned under INID code 62.
•Claims filed after the date of filing of the application / after the date of receipt of the divisional application (Rule 68(4) EPC).

(54) **DATA PROCESSING METHOD AND DATA PROCESSING DEVICE**

(57) Embodiments of this application disclose a data processing method, and relate to the field of artificial intelligence. The method is applied to distributed parallel model training, for example, distributed training of a text translation model, a speech recognition model, a facial recognition model, a three-dimensional reconstruction model, and a virtual reality model. The method can support implementation of hybrid parallelism in a distributed cluster. The method includes: inserting, based on tensor layouts of tensors of each operator in a deep neural network model, a redistribution operator between operators that have an input-output dependency relationship, to implement conversion between different tensor layouts; inserting the redistribution operator into a sliced computational graph; and determining an updated sliced computational graph to implement parallel model training of the deep neural network.

FIG. 6

## Description

This application claims priority to Chinese Patent Application No. 202010231450.7, filed with the China National Intellectual Property Administration on March 27, 2020 and entitled "DATA PROCESSING METHOD AND DATA PROCESSING DEVICE", which is incorporated herein by reference in its entirety.

## TECHNICAL FIELD

This application relates to the field of artificial intelligence, and in particular, to a data processing method and a data processing device.

## BACKGROUND

Deploying a deep learning model on a plurality of computing devices is a manner of training a large-scale complex model. Data parallelism is a most widely used parallelism policy. However, as a dataset and the model become larger, a memory of a single card is limited. In addition, as a quantity of training devices increases, communication overheads increase. Consequently, data parallelism encounters a bottleneck. In this case, hybrid parallelism of data parallelism and model parallelism is required.

A parallelism solution of the deep learning model may be embodied based on tensor layouts of all operators in the model. The tensor layout includes a device matrix, a tensor shape, and a tensor map. In an existing mesh tensor flow (Mesh-Tensorflow) solution, a tensor may be sharded in any dimension, but device matrices of all tensors need to be the same.

Because the Mesh-Tensorflow solution requires that the device matrices of all the tensors be the same, tensor maps have constraints. For example, sample dimensions of all the tensors need to be mapped to a same dimension of the device matrices of all the tensors, which restricts conversion of a plurality of parallelism manners. For example, hybrid parallelism of data parallelism and model parallelism cannot be implemented.

## SUMMARY

An embodiment of this application provides a data processing method, applied to a distributed cluster for training a deep neural network model, so that hybrid parallelism constituted by different parallelism modes can be implemented in the distributed cluster.

A first aspect of embodiments of this application provides a data processing method. The data processing method provided in this embodiment of this application is usually applied to a distributed cluster, and the distributed cluster includes a plurality of data processing devices. The method may be applied to one or more data processing devices in the distributed cluster, and the method includes: obtaining a deep neural network model, a tensor layout of an input tensor of each operator in the deep neural network model, and a tensor layout of an output tensor of the operator in the deep neural network model, where the tensor layout includes a device matrix, a tensor map, and a tensor shape; each element in the device matrix indicates one data processing device in the distributed cluster, and the plurality of data processing devices corresponding to all elements in the device matrix are configured to execute the deep neural network model in parallel; the deep neural network model includes a first operator and a second operator, and the first operator and the second operator are two consecutive operators in the deep neural network model; and an output tensor of the first operator is an input tensor of the second operator, and a first tensor layout is inconsistent with a second tensor layout, where the first tensor layout is a tensor layout of the output tensor of the first operator, and the second tensor layout is a tensor layout of the input tensor of the second operator; determining a sliced computational graph of the data processing device based on the tensor layout of the input tensor of each operator and the tensor layout of the output tensor of the operator; determining a redistribution operator between the first operator and the second operator, where the redistribution operator is used to convert the first tensor layout into the second tensor layout; inserting the redistribution operator into the sliced computational graph, to determine an updated sliced computational graph, where the updated sliced computational graph is used to indicate to execute a part of the deep neural network model.

According to the data processing method provided in this embodiment of this application, the data processing device obtains the deep neural network model and tensor layouts of all operators in the deep neural network model, including the tensor layout of the input tensor and the tensor layout of the output tensor. If there are two consecutive operators, and the tensor layout of the output tensor of the first operator is inconsistent with the tensor layout of the input tensor of the second operator, the sliced computational graph obtained based on the tensor layouts cannot be performed. In this application, the data processing device determines the redistribution operator between the first operator and the second operator, and the redistribution operator is used to convert the tensor layout of the output tensor of the first operator into the tensor layout of the input tensor of the second operator. Therefore, the redistribution operator is inserted into the sliced computational graph, and the determined updated sliced computational graph may be executed. The solution may be applied to any tensor layout of each operator in the deep neural network model. Conversion between parallelism manners is implemented by using the redistribution operator, so that various types of hybrid parallelism can be implemented in the distributed cluster.

In a possible implementation of the first aspect, a device matrix of the first tensor layout is inconsistent with a device matrix of the second tensor layout, and/or a tensor map of the first tensor layout is inconsistent; and the determining a redistribution operator between the first operator and the second operator includes: determining an intermediate tensor layout based on the first tensor layout and the second tensor layout; determining a first reshape operator based on the first tensor layout and the intermediate tensor layout, a tensor layout of an input tensor of the first reshape operator, and a tensor layout of an output tensor of the first reshape operator, where the first reshape operator is used to implement conversion from the first tensor layout to the intermediate tensor layout; and/or determining a second reshape operator based on the second tensor layout and the intermediate tensor layout, a tensor layout of an input tensor of the second reshape operator, and a tensor layout of an output tensor of the second reshape operator, where the second reshape operator is located between the first reshape operator and the second operator, and the second reshape operator is used to implement conversion from the intermediate tensor layout to the second tensor layout.

According to the data processing method provided in this embodiment of this application, for a scenario in which a tensor shape of the first tensor layout is consistent with a tensor shape of the second tensor layout, and at least one of the device matrix and the tensor map of the first tensor layout is inconsistent with that of the second tensor layout, how to determine the redistribution operator may be specifically: generating at least one reshape operator by using the intermediate tensor layout, and inserting the reshape operator between the first operator and the second operator, so that the first tensor layout can be converted into the second tensor layout. The sliced computational graph is updated by using the generated reshape operator, so that a workload of a user can be reduced and model parallelism training efficiency can be improved.

In a possible implementation of the first aspect, the device matrix of the first tensor layout is inconsistent with the device matrix of the second tensor layout; the determining an intermediate tensor layout based on the first tensor layout and the second tensor layout includes: determining an extended device matrix based on the device matrix of the first tensor layout and the device matrix of the second tensor layout, where a product of elements in the extended device matrix is the same as a product of elements in a device matrix of the output tensor of the first operator, and is the same as a product of elements in a second device matrix of the input tensor of the second operator; and any element in each of the device matrix of the first tensor layout and the device matrix of the second tensor layout is equal to one element in the extended device matrix or a product of at least two elements in the extended device matrix; and determining, based on the extended device matrix, a first equivalent tensor layout equivalent to the first tensor layout and a second equivalent tensor layout equivalent to the second tensor layout, where a device matrix of the first equivalent tensor layout is consistent with a device matrix of the second equivalent tensor layout; and when a tensor shape of the first equivalent tensor layout is consistent with a tensor shape of the second equivalent tensor layout, the intermediate tensor layout includes the first equivalent tensor layout and the second equivalent tensor layout, and the tensor shape is a quantity of elements of a tensor in each dimension.

According to the data processing method provided in this embodiment of this application, how to determine the reshape operator when the device matrix of the first tensor layout is inconsistent with the device matrix of the second tensor layout is specifically described. Specifically, the first equivalent tensor layout equivalent to the first tensor layout and the second equivalent tensor layout equivalent to the second tensor layout are found by determining the extended device matrix, the device matrix of the first equivalent tensor layout is consistent with the device matrix of the second equivalent tensor layout, and further the reshape operator is generated based on the first equivalent tensor layout and the second equivalent tensor layout. Based on this solution, the reshape operator is automatically generated to update the sliced computational graph, so that a workload of designing conversion between tensor layouts by the user can be reduced and the model parallelism training efficiency can be improved.

The tensor shape of the first equivalent tensor layout is consistent with the tensor shape of the second equivalent tensor layout, and a tensor map of the first equivalent tensor layout is inconsistent with a tensor map of the second equivalent tensor layout; and the method further includes: determining one or more tensor map conversion operators, where the tensor map conversion operator includes a slice operator, a concat operator, or a communication operator, a tensor layout of an input tensor of the one or more tensor map conversion operators is consistent with the first equivalent tensor layout, a tensor layout of an output tensor of the one or more tensor map conversion operators is consistent with the second equivalent tensor layout, and the one or more tensor map conversion operators are used to determine the updated sliced computational graph.

According to the data processing method provided in this embodiment of this application, a case in which tensor shapes are consistent but tensor maps are inconsistent after the device matrices are normalized is specifically described. The data processing device determines a first tensor map conversion operator sequence, including the one or more tensor map conversion operators used to implement conversion from the tensor map of the first equivalent tensor layout to the tensor map of the second equivalent tensor layout. The sliced computational graph is updated by using the one or more generated tensor map conversion operators, so that the workload of designing conversion between tensor layouts by the user can be reduced and the model parallelism training efficiency can be improved.

In a possible implementation of the first aspect, when the tensor shape of the first equivalent tensor layout is inconsistent with the tensor shape of the second equivalent tensor layout, the method further includes: normalizing the tensor shapes based on the first equivalent tensor layout and the second equivalent tensor layout, and determining a third equivalent tensor layout equivalent to the first equivalent tensor layout and a fourth equivalent tensor layout equivalent to the second equivalent tensor layout, where a device matrix of the third equivalent tensor layout is consistent with a device matrix of the fourth equivalent tensor layout, and a tensor shape of the third equivalent tensor layout is consistent with a tensor shape of the fourth equivalent tensor layout; and the intermediate tensor layout includes the third equivalent tensor layout and the fourth equivalent tensor layout.

According to the data processing method provided in this embodiment of this application, a scenario in which the tensor shapes are inconsistent after the device matrices of the first tensor layout and the second tensor layout are normalized is specifically described. The tensor shapes need to be normalized, and the third equivalent tensor layout equivalent to the first equivalent tensor layout is determined, to determine the reshape operator. The sliced computational graph is updated by using the generated reshape operator, so that a workload of designing conversion between tensor layouts by the user can be reduced and the model parallelism training efficiency can be improved.

In a possible implementation of the first aspect, a tensor map of the third equivalent tensor layout is inconsistent with a tensor map of the fourth equivalent tensor layout; and the method further includes: determining one or more tensor map conversion operators, where the tensor map conversion operator includes a slice operator, a concat operator, or a communication operator, a tensor layout of an input tensor of the one or more tensor map conversion operators is consistent with the third equivalent tensor layout, a tensor layout of an output tensor of the one or more tensor map conversion operators is consistent with the fourth equivalent tensor layout, and the one or more tensor map conversion operators are used to determine the updated sliced computational graph.

According to the data processing method provided in this embodiment of this application, a scenario in which the tensor maps are still inconsistent after the device matrices of the first tensor layout and the second tensor layout are normalized, and the tensor shapes are normalized is specifically described. A second tensor map conversion operator sequence further needs to be determined, including the one or more tensor map conversion operators used to implement conversion from the third equivalent tensor layout to the fourth equivalent tensor layout. The sliced computational graph is updated by using the one or more generated tensor map conversion operators, so that the workload of designing conversion between tensor layouts by the user can be reduced and the model parallelism training efficiency can be improved.

In a possible implementation of the first aspect, the device matrix of the first tensor layout is consistent with the device matrix of the second tensor layout, and the tensor shape of the first tensor layout is inconsistent with the tensor shape of the second tensor layout; and the determining an intermediate tensor layout based on the first tensor layout and the second tensor layout includes: determining, based on the first tensor layout and the second tensor layout, a fifth equivalent tensor layout equivalent to the first tensor layout and a sixth equivalent tensor layout equivalent to the second equivalent tensor layout, where a device matrix of the fifth equivalent tensor layout is consistent with a device matrix of the sixth equivalent tensor layout, and a tensor shape of the fifth equivalent tensor layout is consistent with a tensor shape of the sixth equivalent tensor layout; and the intermediate tensor layout includes the fifth equivalent tensor layout and the sixth equivalent tensor layout.

According to the data processing method provided in this embodiment of this application, a scenario in which the device matrices of the first tensor layout and the second tensor layout are consistent, and the tensor shapes of the first tensor layout and the second tensor layout are inconsistent is specifically described. To normalize the tensor shapes, the fifth equivalent tensor layout equivalent to the first tensor layout and the sixth equivalent tensor layout equivalent to the second equivalent tensor layout need to be determined. The fifth equivalent tensor layout and the sixth equivalent tensor layout are used to generate the reshape operator. The sliced computational graph is updated by using the generated reshape operator, so that a workload of designing conversion between tensor layouts by a user can be reduced and model parallelism training efficiency can be improved.

In a possible implementation of the first aspect, a tensor map of the fifth equivalent tensor layout is inconsistent with a tensor map of the sixth equivalent tensor layout; and the method further includes: determining one or more tensor map conversion operators, where the tensor map conversion operator includes a slice operator, a concat operator, or a communication operator, a tensor layout of an input tensor of the one or more tensor map conversion operators is consistent with the fifth equivalent tensor layout, a tensor layout of an output tensor of the one or more tensor map conversion operators is consistent with the sixth equivalent tensor layout, and the one or more tensor map conversion operators are used to determine the updated sliced computational graph.

According to the data processing method provided in this embodiment of this application, a scenario in which the tensor maps are still inconsistent after the tensor shapes are normalized when the device matrices of the first tensor layout and the second tensor layout are consistent and the tensor shapes are inconsistent is specifically described. The data processing device further determines a third tensor map conversion operator sequence, including the one or more tensor map conversion operators used to implement conversion from the fourth equivalent tensor layout to the fifth equivalent tensor layout. The sliced computational graph is updated by using the one or more generated tensor map conversion operators, so that the workload of designing conversion between tensor layouts by the user can be reduced and model parallelism training efficiency can be improved.

In a possible implementation of the first aspect, a device matrix of the first tensor layout is consistent with a device matrix of the second tensor layout, a tensor shape of the first tensor layout is consistent with a tensor shape of the second tensor layout, and a tensor map of the first tensor layout is inconsistent with a tensor map of the second tensor layout; and the determining a redistribution operator between the first operator and the second operator includes: determining one or more tensor map conversion operators, where the tensor map conversion operator includes a slice operator, a concat operator, or a communication operator, and the one or more tensor map conversion operators are used to input the output tensor of the first operator and output the input tensor of the second operator.

According to the data processing method provided in this embodiment of this application, a scenario in which the device matrices of the first tensor layout and the second tensor layout are consistent, the tensor shapes are consistent, and the tensor maps are inconsistent is specifically described. The data processing device further determines a fourth tensor map conversion operator sequence, including the one or more tensor map conversion operators used to implement conversion from the first tensor layout to the second tensor layout. In this solution, the sliced computational graph is updated by using the one or more tensor map conversion operators finally generated based on the first tensor layout and the second tensor layout, so that a workload of designing conversion between tensor layouts by a user can be reduced and model parallelism training efficiency can be improved.

In a possible implementation of the first aspect, the obtaining a deep neural network model, a tensor layout of an input tensor of each operator in the deep neural network model, and a tensor layout of an output tensor of the operator in the deep neural network model includes: obtaining the deep neural network model and a sharding strategy, where the sharding strategy includes a quantity of slices of a tensor of the deep neural network model in each dimension; and determining the tensor layout of the input tensor of each operator in the deep neural network model and the tensor layout of the output tensor of the operator in the deep neural network model based on the deep neural network model and the sharding strategy.

According to the data processing method provided in this embodiment of this application, a specific method for obtaining the tensor layouts by the data processing device may be first obtaining the sharding strategy, and generating the tensor layouts of each operator based on the deep neural network model and the sharding strategy. This provides another implementation of determining the tensor layouts of the operator and improves flexibility of implementing the solution.

In a possible implementation of the first aspect, the sharding strategy includes a first sharding strategy and a second sharding strategy; the determining the tensor layout of the input tensor of each operator in the deep neural network model and the tensor layout of the output tensor of the operator in the deep neural network model based on the deep neural network model and the sharding strategy includes: determining a first overall tensor layout corresponding to the first sharding strategy and a second overall tensor layout corresponding to the second sharding strategy, where the first overall tensor layout includes a tensor layout of an input tensor of each operator in the deep neural network model and a tensor layout of an output tensor of the operator in the deep neural network model that are determined based on the first sharding strategy, and the second overall tensor layout includes a tensor layout of an input tensor of each operator in the deep neural network model and a tensor layout of an output tensor of the operator in the deep neural network model that are determined based on the second sharding strategy; and the method further includes: determining, from the first overall tensor layout and the second overall tensor layout, that the first overall tensor layout includes the tensor layout of the input tensor of each operator in the deep neural network model and the tensor layout of the output tensor of the operator in the deep neural network model, where a sum of communication time and computation time required for training the deep neural network model based on the first overall tensor layout is less than a sum of communication time and computation time required for training the deep neural network model based on the second overall tensor layout.

According to the data processing method provided in this embodiment of this application, the data processing device may obtain at least two sharding strategies, and determine an overall tensor layout of each sharding strategy based on different sharding strategies. It should be noted that one sharding strategy may correspond to a plurality of overall tensor layouts. The first overall tensor layout with lower overheads is determined by comparing different overall tensor layouts. The overheads are the sum of the communication time and the computation time for training the deep neural network model based on the overall tensor layout. It should be noted that in a process of training the deep neural network model based on the overall tensor layout, the redistribution operator that needs to be inserted based on the overall tensor layout needs to be determined. The sliced computational graph is determined based on the first overall tensor layout. In this solution, overall tensor layouts corresponding to a plurality of sharding strategies may be considered, and an overall tensor layout with low overheads is selected for sharding, so that overheads during deep neural network model training can be reduced.

In a possible implementation of the first aspect, a cost model of the first overall tensor layout is less than a cost model of the second overall tensor layout, and the cost model of the first overall tensor layout is a value obtained by performing weighted summation based on a size of a data tensor in the first overall tensor layout, a size of a communication tensor in the first overall tensor layout, and a size of a parameter tensor in the first overall tensor layout, and a weight coefficient of the size of the data tensor, a weight coefficient of the size of the communication tensor, and a weight coefficient of the size of the parameter tensor; and the cost model of the second overall tensor layout is a value obtained by performing weighted summation based on a size of a data tensor in the second overall tensor layout, a size of a communication tensor in the second overall tensor layout, and a size of a parameter tensor in the second overall tensor layout, and a weight coefficient of the size of the data tensor, a weight coefficient of the size of the communication tensor, and a weight coefficient of the size of the parameter tensor.

According to the data processing method provided in this embodiment of this application, when the first overall tensor layout is determined through screening, overheads of different overall tensor layouts may be compared by using cost models, and storage overheads and computation overheads are approximately estimated by using tensors. This provides a specific implementation method for comparing the overheads of the different overall tensor layouts. In addition, the weight coefficient of the size of the data tensor, the weight coefficient of the size of the communication tensor, and the weight coefficient of the size of the parameter tensor may be flexibly set based on different data processing device types. This improves the flexibility of implementing the solution.

In a possible implementation of the first aspect, the sharding strategy is a sharding strategy specified by the user.

The data processing method provided in this embodiment of this application may be further applicable to a scenario in which the user specifies the sharding strategy.

In a possible implementation of the first aspect, the input tensor of each operator in the deep neural network model includes a training dataset, and the training dataset includes a text dataset, an image dataset, or an audio dataset.

According to the data processing method provided in this embodiment of this application, the input tensor of each operator in the deep neural network model includes the training dataset, and the training dataset includes the text dataset, the image dataset, or the audio dataset. The data processing method may be used in a distributed training process of a text translation model, a speech recognition model, a facial recognition model, a three-dimensional reconstruction model, a virtual reality model, and the like. For example, if the text dataset is input, a corresponding deep neural network model may be used to implement automatic translation. If the image dataset is input, a corresponding deep neural network model may be used to implement image recognition, facial recognition, three-dimensional modeling, or the like.

A second aspect of embodiments of this application provides a data processing device, where the device includes:

an obtaining unit, configured to obtain a deep neural network model, a tensor layout of an input tensor of each operator in the deep neural network model, and a tensor layout of an output tensor of the operator in the deep neural network model, where the tensor layout includes a device matrix, a tensor map, and a tensor shape; the deep neural network model includes a first operator and a second operator, and the first operator and the second operator are two consecutive operators in the deep neural network model; and an output tensor of the first operator is an input tensor of the second operator, and a first tensor layout is inconsistent with a second tensor layout, where the first tensor layout is a tensor layout of the output tensor of the first operator, and the second tensor layout is a tensor layout of the input tensor of the second operator; and a determining unit, configured to determine a sliced computational graph based on the tensor layout of the input tensor of each operator and the tensor layout of the output tensor of the operator, where the determining unit is further configured to determine a redistribution operator between the first operator and the second operator, where the redistribution operator is used to convert the first tensor layout into the second tensor layout; and the determining unit is further configured to insert the redistribution operator into the sliced computational graph, to determine an updated sliced computational graph, where the updated sliced computational graph is used to indicate to execute a part of the deep neural network model.

In a possible implementation of the second aspect, a device matrix of the first tensor layout is inconsistent with a device matrix of the second tensor layout, and/or a tensor map of the first tensor layout is inconsistent; and the determining unit is specifically configured to:

determine an intermediate tensor layout based on the first tensor layout and the second tensor layout;
determine a first reshape operator based on the first tensor layout and the intermediate tensor layout, a tensor layout of an input tensor of the first reshape operator, and a tensor layout of an output tensor of the first reshape operator, where the first reshape operator is used to implement conversion from the first tensor layout to the intermediate tensor layout; and/or
determine a second reshape operator based on the second tensor layout and the intermediate tensor layout, a tensor layout of an input tensor of the second reshape operator, and a tensor layout of an output tensor of the second reshape operator, where the second reshape operator is located between the first reshape operator and the second operator, and the second reshape operator is used to implement conversion from the intermediate tensor layout to the second tensor layout.

In a possible implementation of the second aspect, the device matrix of the first tensor layout is inconsistent with the device matrix of the second tensor layout;
the determining unit is specifically configured to:

determine an extended device matrix based on the device matrix of the first tensor layout and the device matrix of the second tensor layout, where a product of elements in the extended device matrix is the same as a product of elements in a device matrix of the output tensor of the first operator, and is the same as a product of elements in a second device matrix of the input tensor of the second operator; and any element in each of the device matrix of the first tensor layout and the device matrix of the second tensor layout is equal to one element in the extended device matrix or a product of at least two elements in the extended device matrix; and
determine, based on the extended device matrix, a first equivalent tensor layout equivalent to the first tensor layout and a second equivalent tensor layout equivalent to the second tensor layout, where a device matrix of the first equivalent tensor layout is consistent with a device matrix of the second equivalent tensor layout; and
when a tensor shape of the first equivalent tensor layout is consistent with a tensor shape of the second equivalent tensor layout, the intermediate tensor layout includes the first equivalent tensor layout and the second equivalent tensor layout, and the tensor shape is a quantity of elements of a tensor in each dimension.

In a possible implementation of the second aspect, the tensor shape of the first equivalent tensor layout is consistent with the tensor shape of the second equivalent tensor layout, and a tensor map of the first equivalent tensor layout is inconsistent with a tensor map of the second equivalent tensor layout; and
the determining unit is further configured to determine one or more tensor map conversion operators, where the tensor map conversion operator includes a slice operator, a concat operator, or a communication operator, a tensor layout of an input tensor of the one or more tensor map conversion operators is consistent with the first equivalent tensor layout, a tensor layout of an output tensor of the one or more tensor map conversion operators is consistent with the second equivalent tensor layout, and the one or more tensor map conversion operators are used to determine the updated sliced computational graph.

In a possible implementation of the second aspect, when the tensor shape of the first equivalent tensor layout is inconsistent with the tensor shape of the second equivalent tensor layout, the determining unit is further configured to: normalize the tensor shapes based on the first equivalent tensor layout and the second equivalent tensor layout, and determine a third equivalent tensor layout equivalent to the first equivalent tensor layout and a fourth equivalent tensor layout equivalent to the second equivalent tensor layout, where a device matrix of the third equivalent tensor layout is consistent with a device matrix of the fourth equivalent tensor layout, and a tensor shape of the third equivalent tensor layout is consistent with a tensor shape of the fourth equivalent tensor layout; and the intermediate tensor layout includes the third equivalent tensor layout and the fourth equivalent tensor layout.

In a possible implementation of the second aspect, a tensor map of the third equivalent tensor layout is inconsistent with a tensor map of the fourth equivalent tensor layout; and
the determining unit is further configured to determine one or more tensor map conversion operators, where the tensor map conversion operator includes a slice operator, a concat operator, or a communication operator, a tensor layout of an input tensor of the one or more tensor map conversion operators is consistent with the third equivalent tensor layout, a tensor layout of an output tensor of the one or more tensor map conversion operators is consistent with the fourth equivalent tensor layout, and the one or more tensor map conversion operators are used to determine the updated sliced computational graph.

In a possible implementation of the second aspect, the device matrix of the first tensor layout is consistent with the device matrix of the second tensor layout, and the tensor shape of the first tensor layout is inconsistent with the tensor shape of the second tensor layout; and
the determining unit is specifically configured to determine, based on the first tensor layout and the second tensor layout, a fifth equivalent tensor layout equivalent to the first tensor layout and a sixth equivalent tensor layout equivalent to the second equivalent tensor layout, where a device matrix of the fifth equivalent tensor layout is consistent with a device matrix of the sixth equivalent tensor layout, and a tensor shape of the fifth equivalent tensor layout is consistent with a tensor shape of the sixth equivalent tensor layout; and the intermediate tensor layout includes the fifth equivalent tensor layout and the sixth equivalent tensor layout.

In a possible implementation of the second aspect, a tensor map of the fifth equivalent tensor layout is inconsistent with a tensor map of the sixth equivalent tensor layout; and
the determining unit is further configured to determine one or more tensor map conversion operators, where the tensor map conversion operator includes a slice operator, a concat operator, or a communication operator, a tensor layout of an input tensor of the one or more tensor map conversion operators is consistent with the fifth equivalent tensor layout, a tensor layout of an output tensor of the one or more tensor map conversion operators is consistent with the sixth equivalent tensor layout, and the one or more tensor map conversion operators are used to determine the updated sliced computational graph.

In a possible implementation of the second aspect, a device matrix of the first tensor layout is consistent with a device matrix of the second tensor layout, a tensor shape of the first tensor layout is consistent with a tensor shape of the second tensor layout, and a tensor map of the first tensor layout is inconsistent with a tensor map of the second tensor layout; and

the determining unit is specifically configured to:

determine one or more tensor map conversion operators, where the tensor map conversion operator includes a slice operator, a concat operator, or a communication operator, and the one or more tensor map conversion operators are used to input the output tensor of the first operator and output the input tensor of the second operator.

In a possible implementation of the second aspect, the obtaining unit is specifically configured to:

obtain the deep neural network model and a sharding strategy, where the sharding strategy includes a quantity of slices of a tensor of the deep neural network model in each dimension; and
the determining module is specifically configured to determine the tensor layout of the input tensor of each operator in the deep neural network model and the tensor layout of the output tensor of the operator in the deep neural network model based on the deep neural network model and the sharding strategy.

In a possible implementation of the second aspect,

the sharding strategy includes a first sharding strategy and a second sharding strategy; and
the determining unit is specifically configured to:

determine a first overall tensor layout corresponding to the first sharding strategy and a second overall tensor layout corresponding to the second sharding strategy, where the first overall tensor layout includes a tensor layout of an input tensor of each operator in the deep neural network model and a tensor layout of an output tensor of the operator in the deep neural network model that are determined based on the first sharding strategy, and the second overall tensor layout includes a tensor layout of an input tensor of each operator in the deep neural network model and a tensor layout of an output tensor of the operator in the deep neural network model that are determined based on the second sharding strategy; and
determine, from the first overall tensor layout and the second overall tensor layout, that the first overall tensor layout includes the tensor layout of the input tensor of each operator in the deep neural network model and the tensor layout of the output tensor of the operator in the deep neural network model, where a sum of communication time and computation time required for training the deep neural network model based on the first overall tensor layout is less than a sum of communication time and computation time required for training the deep neural network model based on the second overall tensor layout.

In a possible implementation of the second aspect, a cost model of the first overall tensor layout is less than a cost model of the second overall tensor layout, and the cost model of the first overall tensor layout is a value obtained by performing weighted summation based on a size of a data tensor in the first overall tensor layout, a size of a communication tensor in the first overall tensor layout, and a size of a parameter tensor in the first overall tensor layout, and a weight coefficient of the size of the data tensor, a weight coefficient of the size of the communication tensor, and a weight coefficient of the size of the parameter tensor; and

the cost model of the second overall tensor layout is a value obtained by performing weighted summation based on a size of a data tensor in the second overall tensor layout, a size of a communication tensor in the second overall tensor layout, and a size of a parameter tensor in the second overall tensor layout, and a weight coefficient of the size of the data tensor, a weight coefficient of the size of the communication tensor, and a weight coefficient of the size of the parameter tensor.

In a possible implementation of the second aspect, the sharding strategy is a sharding strategy specified by a user.

In a possible implementation of the second aspect, the input tensor of each operator in the deep neural network model includes a training dataset, and the training dataset includes a text dataset, an image dataset, or an audio dataset.

A third aspect of embodiments of this application provides a data processing device, including a processor and a memory. The processor and the memory are interconnected, the memory is configured to store a computer program, the computer program includes program instructions, and the processor is configured to invoke the program instructions, to perform the method in any one of the first aspect and the possible implementations.

A fourth aspect of embodiments of this application provides a computer program product including instructions. When the computer program product runs on a computer, the computer is enabled to perform the method in any one of the first aspect and the possible implementations.

A fifth aspect of embodiments of this application provides a computer-readable storage medium including instructions. When the instructions are run on a computer, the computer is enabled to perform the method in any one of the first aspect and the possible implementations.

A sixth aspect of embodiments of this application provides a chip, including a processor. The processor is configured to read and execute a computer program stored in a memory, to perform the method in any possible implementation of any one of the foregoing aspects. Optionally, the chip includes the memory, and the memory and the processor are connected by using a circuit or a wire. Further, optionally, the chip further includes a communication interface, and the processor is connected to the communication interface. The communication interface is configured to receive data and/or information that needs to be processed. The processor obtains the data and/or the information from the communication interface, processes the data and/or the information, and outputs a processing result through the communication interface. The communication interface may be an input/output interface.

A seventh aspect of embodiments of this application provides a distributed cluster. The distributed cluster includes one or more data processing devices in any one of the second aspect and the possible implementations.

For technical effects brought by any implementation of the second aspect, the third aspect, the fourth aspect, the fifth aspect, the sixth aspect, and the seventh aspect, refer to technical effects brought by corresponding implementations of the first aspect. Details are not described herein again.

According to the data processing method provided in this embodiment of this application, the data processing device obtains the deep neural network model and the tensor layouts of all the operators in the deep neural network model, including the tensor layout of the input tensor and the tensor layout of the output tensor. If there are two consecutive operators, and the tensor layout of the output tensor of the first operator is inconsistent with the tensor layout of the input tensor of the second operator, the sliced computational graph obtained based on the tensor layouts cannot be performed. In this application, the data processing device determines the redistribution operator between the first operator and the second operator, and the redistribution operator is used to convert the tensor layout of the output tensor of the first operator into the tensor layout of the input tensor of the second operator. Therefore, the redistribution operator is inserted into the sliced computational graph, and the determined updated sliced computational graph may be executed. This solution may be applied to any tensor layout of each operator in the deep neural network model. Conversion between parallelism manners is implemented by using the redistribution operator, so that the various types of hybrid parallelism can be implemented in the distributed cluster.

## BRIEF DESCRIPTION OF DRAWINGS

FIG. 1 is a schematic diagram of an artificial intelligence main framework according to an embodiment of this application;

FIG. 2 is a schematic diagram of an application environment according to an embodiment of this application;

FIG. 3 is a schematic diagram of a computational graph according to an embodiment of this application;

FIG. 4 is a schematic diagram of a topology structure of a distributed cluster according to an embodiment of this application;

FIG. 5 is a schematic diagram of an application scenario according to an embodiment of this application;

FIG. 6 is a schematic diagram of an embodiment of a data processing method according to an embodiment of this application;

FIG. 7 is a schematic diagram of an embodiment of a tensor layout according to an embodiment of this application;

FIG. 8 is a schematic diagram of another embodiment of a data processing method according to an embodiment of this application;

FIG. 9 is a schematic diagram of an embodiment of generating a redistribution operator according to an embodiment of this application;

FIG. 10 is a schematic diagram of another embodiment of generating a redistribution operator according to an embodiment of this application;

FIG. 11 is a schematic diagram of an embodiment of determining an overall tensor layout according to an embodiment of this application;

FIG. 12 is a schematic diagram of another embodiment of determining an overall tensor layout according to an embodiment of this application;

FIG. 13 is a schematic diagram of an embodiment of a data processing device according to an embodiment of this application;

FIG. 14 is a schematic diagram of another embodiment of a data processing device according to an embodiment of this application; and

FIG. 15 is a diagram of a hardware structure of a chip according to an embodiment of this application.

## DESCRIPTION OF EMBODIMENTS

An embodiment of this application provides a data processing method, applied to a distributed cluster for training a deep neural network model, so that tensor layouts of all operators can implement parallelism in a process of training the deep neural network model.

For ease of understanding, the following briefly describes some technical terms in embodiments of this application.

1. The deep neural network model is also referred to as a model, a network, or an algorithm in embodiments of this application, is divided into a forward algorithm part and a backward computation part. Forward propagation, or referred to as a forward computation part, is a model computation process, and may provide corresponding outputs for a group of inputs. Backpropagation, or referred to as a backward computation part, is to train a model parameter, and use gradient descent on all parameters to minimize a loss function of the model on training data.

2. A computational graph is also referred to as a data flow graph. Each computation in a neural network is a node on the computational graph, and an edge between nodes indicates a dependency relationship between input and output of data. In a sliced computational graph, compared with a full computational graph, an original node remains unchanged, and a data volume corresponding to an edge between nodes is a part of a complete data volume. In addition, in embodiments of this application, a node used for redistribution may be further added to the sliced computational graph.

3. A tensor is an n-dimensional array, and is n-dimensional generalization of scalars, 1-dimensional vectors, and 2-dimensional matrices. In model training of machine learning, both training data and intermediate computation results can be considered as tensors.

4. An operator is used to perform operations on a tensor attribute, such as matrix multiplication, tensor addition, and convolution. In this specification, the operator may be equivalent to a layer (layer) in the neural network.

5. A tensor shape is a one-dimensional array including a quantity of elements of a tensor in each dimension.

6. A device matrix is a one-dimensional array, and indicates a device arrangement manner. A quantity of array elements indicates dimensions in which devices are arranged. A product of array elements is equal to a total quantity of devices.

7. A tensor map is a one-dimensional array. A quantity of elements is equal to a quantity of elements in the tensor shape. A value indicates mapping of a corresponding dimension of a tensor sharded on the device matrix.

8. A tensor layout is a layout of a distributed tensor in each device. The tensor layout is expressed by the tensor shape, the device matrix, and the tensor map.

9. A distributed tensor layout (tensor layout) is an arrangement manner of elements in the distributed tensor on each device. The distributed tensor layout is also referred to as a tensor layout for short in embodiments of this application.

The tensor shape (tensor shape) is a complete shape, and is the quantity of elements in each dimension.

Device matrix (device matrix): A device matrix is designed for each operator.

The tensor map (tensor map) is a vector, and is the same as a dimension of the tensor shape.

The following describes embodiments of this application with reference to accompanying drawings. It is clear that the described embodiments are merely a part rather than all of embodiments of this application. A person of ordinary skill in the art may learn that the technical solutions provided in embodiments of this application are also applicable to a similar technical problem as a technology develops and a new scenario emerges.

The term "and/or" in this application may be an association relationship for describing associated objects, and may indicate three relationships. For example, A and/or B may indicate the following cases: Only A exists, both A and B exist, and only B exists, where A and B may be singular or plural. In addition, the character "/" in this application generally indicates an "or" relationship between the associated objects. In this application, "at least one" means one or more, and "a plurality of" means two or more. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, product, or device.

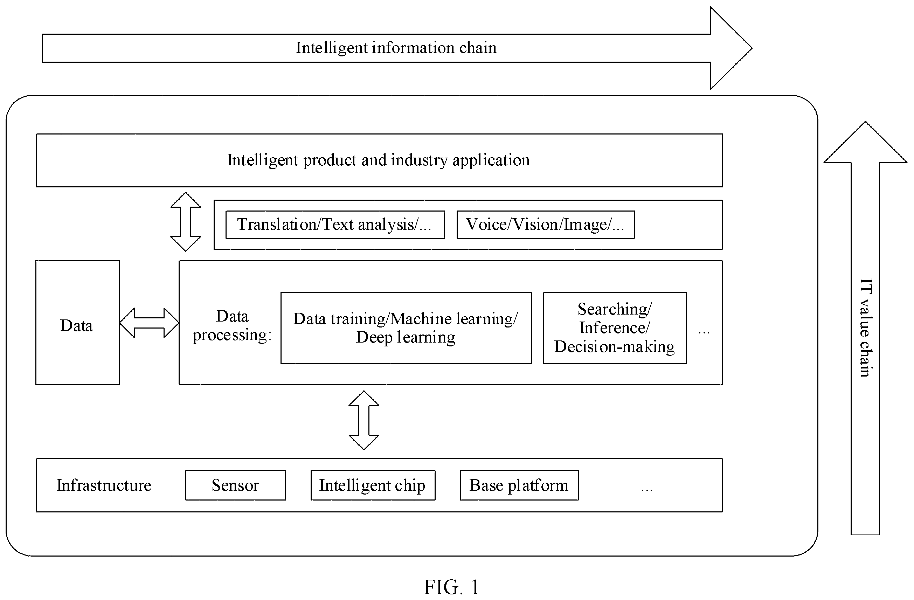

FIG. 1 is a schematic diagram of an artificial intelligence main framework. The main framework describes an overall working procedure of an artificial intelligence system, and is applicable to a requirement of a general artificial intelligence field.

The following describes the artificial intelligence main framework from two dimensions: an "intelligent information chain" (a horizontal axis) and an "IT value chain" (a vertical axis).

The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, data undergoes a condensation process of "data-information-knowledge-wisdom".

The "IT value chain" reflects a value brought by artificial intelligence to the information technology industry from an underlying infrastructure and information (providing and processing technology implementation) of human intelligence to an industrial ecological process of a system.

(1) Infrastructure

The infrastructure provides computing capability support for the artificial intelligence system, implements communication with the external world, and implements support by using a base platform. A sensor is used to communicate with the outside. A computing capability is provided by an intelligent chip (a hardware acceleration chip, for example, a CPU, an NPU, a GPU, an ASIC, or an FPGA). The base platform includes related platform assurance and support such as a distributed computing framework and a network, and may include cloud storage and computing, an interconnection and interworking network, and the like. For example, the sensor communicates with the outside to obtain data, and the data is provided to an intelligent chip in a distributed computing system for computation, where the distributed computing system is provided by the base platform.

(2) Data

Data at an upper layer of the infrastructure is used to indicate a data source in the field of artificial intelligence. The data relates to a graph, an image, a voice, and text, further relates to internet of things data of a conventional device, and includes service data of an existing system and perception data such as force, displacement, a liquid level, a temperature, and humidity.

(3) Data processing

Data processing usually includes manners such as data training, machine learning, deep learning, searching, inference, and decision-making.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed by using formal information according to an inference control policy. A typical function is searching and matching.

Decision-making is a process in which a decision is made after intelligent information is inferred, and usually provides functions such as classification, ranking, and prediction.

(4) General capabilities

After data processing mentioned above is performed on data, some general capabilities may be further formed based on a data processing result, for example, an algorithm or a general system, such as translation, text analysis, computer vision processing, speech recognition, and image recognition.

(5) Intelligent product and industry application

The intelligent product and the industry application are a product and an application of the artificial intelligence system in various fields, and are package of an overall solution of the artificial intelligence, so that decision-making for intelligent information is productized and an application is implemented. Application fields mainly include smart manufacturing, smart transportation, smart home, smart health care, smart security protection, autonomous driving, a safe city, a smart terminal, and the like.

The data processing method provided in embodiments of this application may be applied to parallel training of a deep neural network model in various distributed cluster scenarios. A sharding strategy may be independently determined for each operator, a tensor layout is generated, and a slice graph that is of the deep neural network model and that can be executed by a single data processing device is obtained by inserting a redistribution operator.

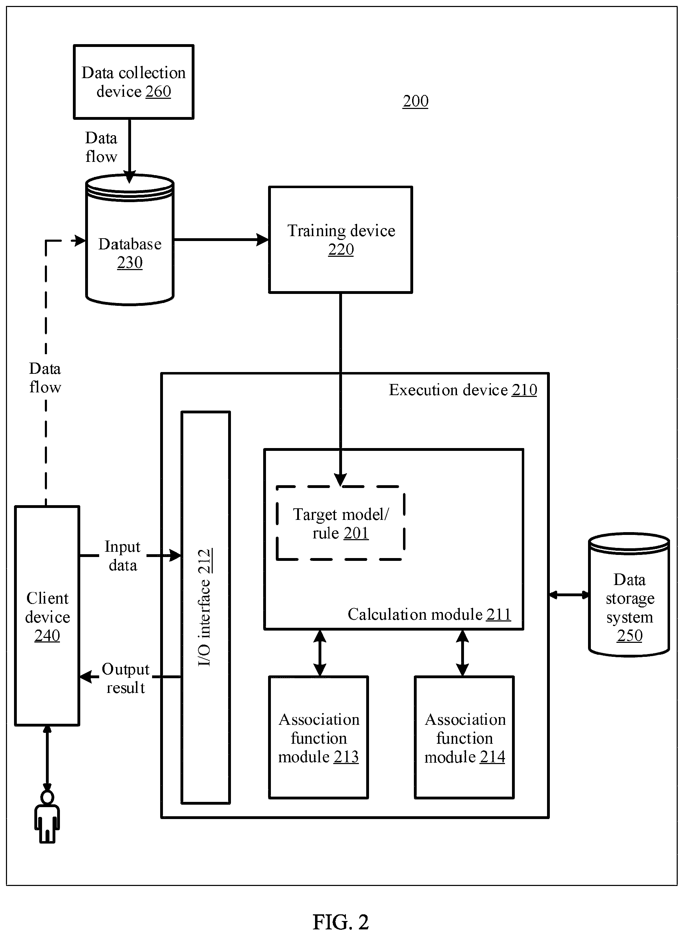

Refer to FIG. 2. An embodiment of this application provides a system architecture 200. Optionally, a data collection device 260 is configured to collect data and store the data in a database 230. A training device 220 generates a target model/rule 201 based on the data maintained in the database 230. Optionally, the data may be text data, audio data, or image data. An image includes a picture and a video. A specific data type is not limited herein. The following describes in more detail how the training device 220 obtains the target model/rule 201 based on the data. The target model/rule 201 can be used in application scenarios such as text translation, speech recognition, facial recognition, three-dimensional reconstruction, and virtual reality.

The target model/rule 201 may be obtained based on a deep neural network. The following describes the deep neural network.

Work at each layer of the deep neural network may be described by using a mathematical expression $\vec{y} = a(W \cdot \vec{x} + b)$. From a physical layer, work at each layer of the deep neural network may be understood as completing transformation from input space to output space (namely, from row space to column space of a matrix) by performing five operations on the input space (a set of input vectors). The five operations are as follows: 1. dimension increasing/dimension reduction; 2. scaling up/scaling down; 3. rotation; 4. translation; and 5. "bending". The operation 1, the operation 2, and the operation 3 are performed by $W \cdot \vec{x}$, the operation 4 is performed by $+b$, and the operation 5 is performed by $a()$. The word "space" is used herein for expression because a classified object is not a single thing, but a type of things. Space refers to a collection of all individuals of such type of things. $W$ is a weight vector, and each value in the vector indicates a weight value of one neuron in the neural network at this layer. The vector $W$ determines space transformation from the input space to the output space described above. In other words, a weight $W$ at each layer controls how to transform space. A purpose of training the deep neural network is to finally obtain a weight matrix (a weight matrix formed by vectors $W$ at a plurality of layers) at all layers of a trained neural network. Therefore, a training process for the neural network is essentially a manner of learning control of space transformation, and more specifically, learning a weight matrix.

Because an output of the deep neural network is expected to be as much as possible close to a value that actually wants to be predicted, a current predicted value of the network and an expected target value are compared, so that a weight vector of each layer of the neural network can be updated based on a difference between the predicted value and the target value (certainly, there is usually an initialization process before first updating, to be specific, a parameter is preconfigured for each layer of the deep neural network). For example, if the predicted value of the network is large, the weight vector is adjusted to obtain a smaller predicted value, and is continuously adjusted until the neural network can predict the expected target value. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

The target model/rule obtained by the training device 220 may be applied to different systems or devices. In FIG. 2, an I/O interface 212 is configured for an execution device 210, to exchange data with an external device. A "user" may input data to the I/O interface 212 by using a client device 240.

The execution device 210 may invoke data, code, and the like in a data storage system 250, or may store data, instructions, and the like in the data storage system 250.

A calculation module 211 processes input data by using the target model/rule 201. Three-dimensional modeling is used as an example, the calculation module 211 may parse an input image or an input image sequence, and restore depth information of a target.

An association function module 213 may preprocess image data in the calculation module 211.

An association function module 214 may preprocess image data in the calculation module 211.

Finally, the I/O interface 212 returns a processing result to the client device 240, and provides the processing result for the user.

More deeply, the training device 220 may generate, for different targets, corresponding target models/rules 201 based on different data, to provide a better result for the user.

In a case shown in FIG. 2, the user may manually specify data to be input to the execution device 210, for example, may perform an operation on an interface provided by the I/O interface 212. In another case, the client device 240 may automatically input data to the I/O interface 212 and obtain a result. If the client device 240 needs to obtain permission of the user for automatically inputting the data, the user may set corresponding permission on the client device 240. The user may view, on the client device 240, a result output by the execution device 210, and a specific presentation form may be a specific manner, for example, display, a sound, or an action. The client device 240 may be also used as a data collection end to store collected training data in the database 230.

It should be noted that FIG. 2 is merely a schematic diagram of a system architecture according to an embodiment of this application. A location relationship between devices, components, modules, and the like shown in the figure does not constitute any limitation. For example, in FIG. 2, the data storage system 250 is an external storage device relative to the execution device 210, and in another case, the data storage system 250 may alternatively be disposed in the execution device 210. For another example, in FIG. 2, the training device 220, the execution device 210, and the client device 240 are independent devices. In another case, the training device 220 and the execution device 210 may be a same physical device, and the physical device may implement all functions of the training device 220 and the execution device 210. Optionally, the execution device 210 and the client device 240 may alternatively be a same physical device, and the physical device may implement all functions of the execution device 210 and the client device 240. Optionally, the training device 220, the execution device 210, and the client device 240 are a same physical device, and the physical device implements all functions of the training device 220, the execution device 210, and the client device 240. A specific scenario architecture in this embodiment of this application is not limited herein.

In a parallelism solution of an existing deep learning model: a mesh tensor flow (Mesh-Tensorflow) solution, sharding may be performed based on any dimension of all tensors in the model, but device matrices of all the tensors need be the same. Because the Mesh-Tensorflow solution requires that the device matrices of all the tensors be the same, tensor maps have constraints. For example, sample dimensions of all the tensors need to be mapped to a same dimension of the device matrices of all the tensors, which restricts conversion of a plurality of parallelism manners. For example, hybrid parallelism of data parallelism and model parallelism cannot be implemented. Tensor sharding cannot be performed for each operator separately, and overall communication efficiency of the parallelism solution is low.

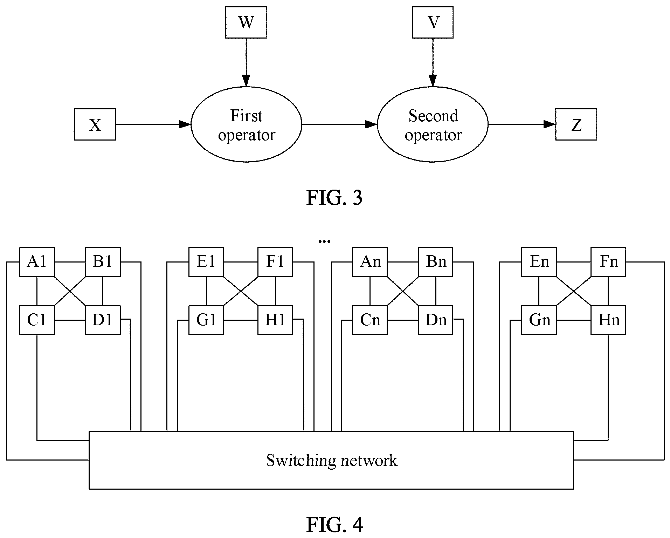

FIG. 3 is a schematic diagram of a computational graph according to an embodiment of this application.

A layer (layer) in a deep neural network model may be considered as an operator. The deep neural network model includes a plurality of operators. In FIG. 3, a part of a computational graph of the deep neural network is described by using a first operator and a second operator as examples. Input tensors of the first operator include a data tensor X and a parameter tensor W, and an output tensor of the first operator is an input tensor of the second operator. The second operator further has an input tensor, namely, a parameter tensor V, and an output tensor of the second operator is a tensor Z. It may be understood that tensors of an operator include an input tensor and an output tensor, and a quantity of tensors of the operator is not limited. The operator may have an input parameter tensor, or may have no input parameter tensor. This is not specifically limited herein. FIG. 3 is merely a possible computational graph.

FIG. 4 is a schematic diagram of a topology structure of a distributed cluster according to an embodiment of this application.

The distributed cluster usually includes a plurality of servers, and each server may include a plurality of data processing devices. The data processing device may be specifically a CPU, a GPU, or a processor of another type, for example, an Ascend chip. This is not specifically limited herein. FIG. 4 shows a possible topology structure of the distributed cluster. The distributed cluster includes n servers. Eight data processing devices are deployed in each server, which are usually referred to as one machine with eight cards for short. The servers communicate with each other by using a switching network. It may be understood that a communication delay between the servers is greater than a communication delay between data processing devices inside the servers. The deep neural network may be deployed in the distributed cluster, and a plurality of data processing devices in the plurality of servers train the deep neural network model in parallel.

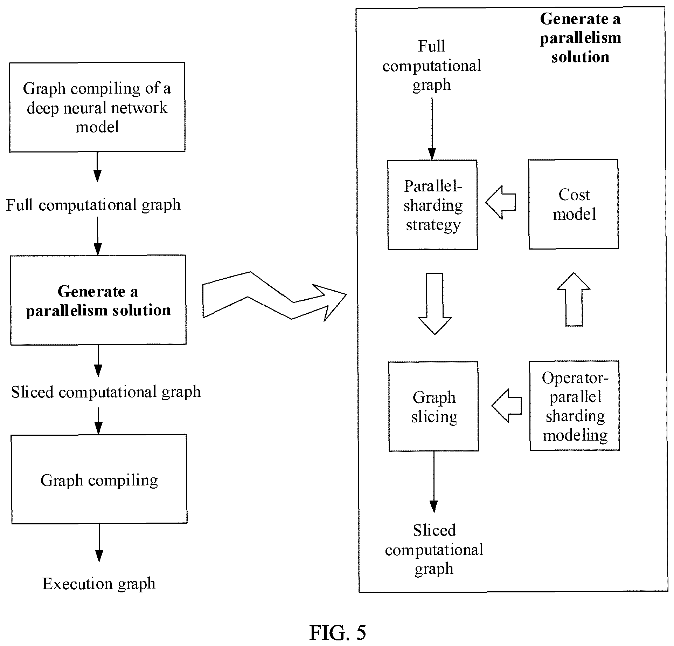

FIG. 5 is a schematic diagram of an application scenario according to an embodiment of this application.

A deep neural network model is compiled by using a python front-end graph, to obtain a full computational graph through conversion. In this application, a full computational graph executed by a single machine is obtained, and a parallelism solution is generated based on the full computational graph and according to the data processing method provided in embodiments of this application, to obtain a sliced computational graph. The sliced computational graph is used by a single data processing device to execute a part of training the deep neural network model. The sliced computational graph is compiled through automatic differentiation or graph optimization, to obtain an execution graph.

The data processing method provided in embodiments of this application is mainly used to generate the parallelism solution, and the parallelism solution specifically includes an operator-parallel sharding modeling module, a cost model module, a parallel-sharding strategy, and a graph slicing module. The operator-parallel sharding modeling module is configured to generate a plurality of candidate sharding strategies and overall operator tensor layouts of the corresponding deep neural network model. The cost model module may determine a target sharding strategy from the plurality of candidate sharding strategies based on overheads. The parallel-sharding strategy module is configured to insert a redistribution operator. The graph slicing module performs graph slicing based on an updated deep neural network model into which the redistribution operator is inserted and tensor layouts of each operator, to obtain the sliced computational graph.

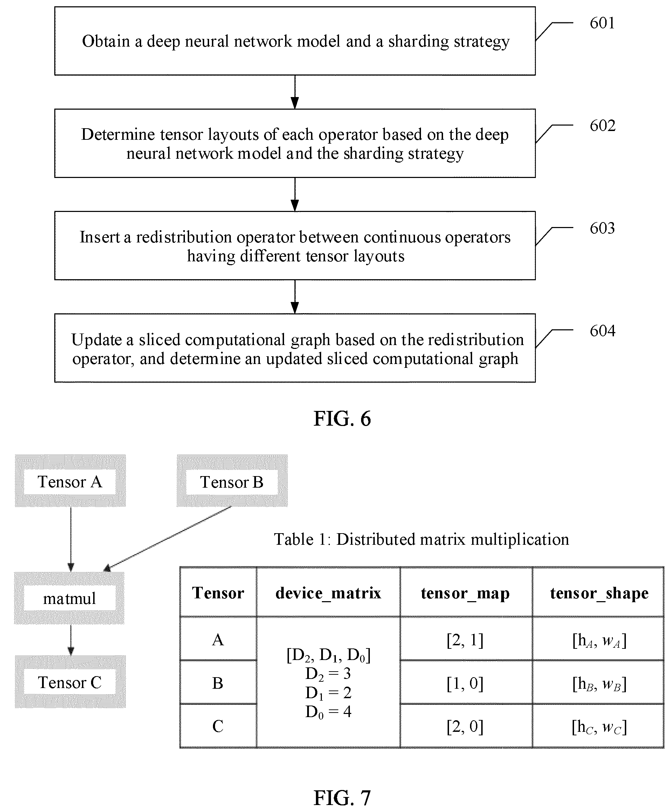

FIG. 6 is a schematic diagram of an embodiment of a data processing method according to an embodiment of this application.

601: A data processing device obtains a deep neural network model and a sharding strategy.

The data processing device obtains the deep neural network model that is also referred to as a model, a network, or an algorithm in embodiments of this application, and determines, based on the obtained model, a full forward graph executed by a single machine for the model.

The data processing device obtains the sharding strategy, where the sharding strategy is a sharding manner of each tensor in the model, and includes a quantity of slices of the tensor in each dimension. It should be noted that the sharding strategy may be specified by a user, or may be generated by the data processing device. This is not specifically limited herein. Optionally, the data processing device generates a plurality of candidate sharding strategies based on the model and device topology information, and determines an optimal sharding strategy from the plurality of candidate sharding strategies. For a specific implementation method, refer to subsequent embodiments.

It should be noted that step 601 of obtaining the sharding strategy is an optional operation. If the data processing device generates the plurality of candidate sharding strategies based on the model and the device topology information, the data processing device further obtains a plurality of overall tensor layouts, and determines a target overall tensor layout from the plurality of overall tensor layouts. Step 603 may be directly performed.

602: The data processing device determines tensor layouts of each operator based on the deep neural network model and the sharding strategy.

A distributed tensor layout (tensor layout) is an arrangement manner of elements in a distributed tensor on each device, and is constituted by a device matrix (device matrix), a tensor map (tensor map), and a tensor shape (tensor shape). In this embodiment and the subsequent embodiments, the distributed tensor layout is referred to as a tensor layout for short. The tensor shape is a one-dimensional array including a quantity of elements of a tensor in each dimension. The device matrix is used to express a device arrangement manner, and is a one-dimensional array. A quantity of array elements indicates dimensions of device arrangement. A product of array elements is equal to a total quantity of devices. The tensor map is a one-dimensional array. A quantity of elements is equal to a quantity of elements in the tensor shape. A value of each element indicates mapping of each dimension of a corresponding tensor sharded on the device matrix. A tensor layout expression can support tensor layout requirements of operators in various parallelism modes.

The data processing device may obtain tensor slices of the data processing device by determining the tensor layouts of each operator, to obtain a sliced computational graph.

The data processing device may determine the tensor layouts of each operator based on the full forward graph of the deep neural network model and the sharding strategy, which specifically includes: determining tensors of all operators based on the deep neural network model, including the quantity of elements of the tensor in each dimension, namely, the tensor shape. A device matrix and a tensor map of each of tensors of each operator may be determined based on the sharding strategy, that is, the quantity of slices of the tensor in each dimension, and a device topology of the distributed cluster, including a quantity of data processing devices in each server, a connection relationship between the servers, and the like.

Optionally, if in step 601, the sharding strategy is specified by the user, the data processing device may generate the tensor layouts of each operator according to a preset rule and the sharding strategy specified by the user, or may generate a plurality of overall tensor layouts according to the sharding strategy specified by the user. The overall tensor layout includes tensor layouts of tensors of each operator in the deep neural network model, and then an optimal overall tensor layout is determined from the plurality of overall tensor layouts.

Optionally, if in step 601, the sharding strategy is determined by the data processing device from a plurality of candidate sharding strategies, the data processing device may determine an optimal overall tensor layout corresponding to the sharding strategy. For details, refer to a subsequent embodiment.

For example, FIG. 7 is a schematic diagram of an embodiment of a tensor layout according to an embodiment of this application.

Input tensors of a matrix multiplication operator (matmul) are a tensor A and a tensor B, and an output tensor is a tensor C.

Table 1 in FIG. 7 shows tensor layouts of the tensor A, the tensor B, and the tensor C. It can be learned that device matrices of the three tensors are all [3, 2, 4], a tensor shape of the tensor A is $[h_A, w_A]$, and a tensor map of the tensor A is [2, 1], indicating that a dimension 0 $h_A$ of the tensor A is mapped to a dimension 2 of the device matrix, and a dimension 1 $w_A$ of the tensor A is mapped to a dimension 1 of the device matrix. Similarly, a tensor shape of the tensor B is [hB, wB], and a tensor map of the tensor B is [1, 0]. A tensor shape of the tensor C is [hC, wC], and a tensor map of the tensor C is [2, 0].

It should be noted that step 601 and step 602 are optional steps. Before step 603, the data processing device may directly obtain the deep neural network model, a tensor layout of an input tensor of each operator in the deep neural network model, and a tensor layout of an output tensor of the operator in the deep neural network model, and may obtain the tensor slices of the data processing device based on the deep neural network model, the tensor layout of the input tensor of each operator in the deep neural network model, and the tensor layout of the output tensor of the operator in the deep neural network model, to obtain the sliced computational graph.

603: The data processing device inserts a redistribution operator between consecutive operators having different tensor layouts.

It is assumed that a first operator and a second operator are two consecutive operators in the full forward graph of the deep neural network model, and a tensor layout (tensor_layout_from) of an output tensor of the first operator is inconsistent with a tensor layout (tensor_layout_to) of an input tensor of the second operator. In this case, the data processing device cannot perform the tensor slices determined in step 602. In this embodiment of this application, the redistribution (redistribution) operator is inserted between the first operator and the second operator.

That tensor layouts are inconsistent means that at least one of device matrices, tensor maps, and tensor shapes are different.

If device matrices of tensor_layout_from and tensor_layout_to are inconsistent, the data processing device normalizes the device matrices, and determines a first equivalent tensor layout (tensor_layout_from2) of tensor_layout_from and a second equivalent tensor layout (tensor_layout_to2) of tensor_layout_to, where a device arrangement of tensor_layout_from2 is consistent with a device arrangement of tensor_layout_to2. Conversion between equivalent tensor layouts can be implemented by using a reshape (reshape) operator. For example, tensor_layout_from is converted into tensor_layout_from2 by using the reshape operator.

If the device matrices of tensor_layout_from and tensor_layout_to are consistent and tensor shapes are inconsistent, or if a tensor shape of tensor_layout_from2 is inconsistent with a tensor shape of tensor_layout_to2, the data processing device normalizes the tensor shapes, and determines a third equivalent tensor layout (tensor_layout_from3) of tensor_layout_from and a fourth equivalent tensor layout (tensor_layout_to3) of tensor_layout_to, where a tensor shape of tensor_layout_from3 is consistent with a tensor shape of tensor_layout_to3. Conversion between equivalent tensor layouts can be implemented by using a reshape (reshape) operator. For example, tensor_layout_from2 is converted into tensor_layout_from3 by using the reshape operator.

If the device matrices of tensor_layout_from and tensor_layout_to are consistent, the tensor shapes are consistent, and tensor maps are inconsistent, or if the device arrangements of tensor_layout_from2 and tensor_layout_to2 are consistent, the tensor shapes are consistent, and tensor maps are inconsistent, or if device arrangements of tensor_layout_from3 and tensor_layout_to3 are consistent, the tensor shapes are consistent, and tensor maps are inconsistent, a tensor map conversion operator such as a slice (slice) operator, a concat (concat) operator, or a communication operator is inserted between tensors whose tensor shapes are inconsistent. The communication operator includes an alltoall operator, an allgather operator, and the like. The tensor map conversion operator may be used to implement conversion between tensors whose tensor maps are different, for example, conversion from tensor_layout_from3 to tensor_layout_to3. It may be understood that tensor layouts of an operator may be obtained when the communication operator or the slice operator is generated.

Based on a specific case in which tensor_layout_from is inconsistent with tensor_layout_to, the data processing device generates one or more of the reshape operator, the slice operator, the concat operator, the alltoall operator, and the allgather operator. In other words, the redistribution (redistribution) operator may include a single operator or a redistribution operator sequence including a plurality of operators. A specific quantity of operators and an operator type are not limited herein. The redistribution operator may be used to convert tensor_layout_from to tensor_layout_to.

For a specific calculation method for generating the redistribution operator, refer to a subsequent embodiment.

It should be noted that there may be a plurality of groups of first operators and a plurality of groups of second operators in the deep neural network model, and an executable updated deep neural network model may be determined by inserting redistribution operators between each group of first operators and each group of second operators.

Optionally, if in step 601, the sharding strategy is determined by the data processing device from the plurality of candidate sharding strategies, the data processing device may directly obtain the redistribution operator that needs to be inserted between the first operator and the second operator. In this step, the redistribution operator may be inserted between the first operator and the second operator in a sequence.

604: The data processing device updates the sliced computational graph based on the redistribution operator, and determines an updated sliced computational graph.

The data processing device updates the sliced computational graph based on the redistribution operator, and then generates a slice execution graph based on a graph compilation procedure by using procedures such as automatic differentiation and graph optimization. A single data processing device executes, based on a corresponding slice execution graph, a part of a process of training the deep neural network model.

Similarly, each data processing device in the distributed cluster may obtain a sliced computational graph of the data processing device, generate an execution graph by using the sliced computational graph, and execute the part of the process of training the deep neural network model.

According to the data processing method provided in this embodiment of this application, the data processing device obtains the deep neural network model and tensor layouts of all operators in the deep neural network model, including the tensor layout of the input tensor and the tensor layout of the output tensor. If there are two consecutive operators, and the tensor layout of the output tensor of the first operator is inconsistent with the tensor layout of the input tensor of the second operator, the sliced computational graph obtained based on the tensor layouts cannot be performed. In this application, the data processing device determines the redistribution operator between the first operator and the second operator, and the redistribution operator is used to convert the tensor layout of the output tensor of the first operator into the tensor layout of the input tensor of the second operator. Therefore, the redistribution operator is inserted into the sliced computational graph, and the determined updated sliced computational graph may be executed. The solution may be applied to tensor layouts of any given operator. Conversion between parallelism manners is implemented by using the redistribution operator, so that various types of hybrid parallelism can be implemented in the distributed cluster.

The data processing method provided in this embodiment of this application supports a flexible tensor sharding parallelism manner. Each operator is modeled independently and may be sharded in all dimensions of a tensor. Tensor layouts of operators are converted by using a redistribution operator sequence. An existing Mesh-Tensorflow method is modeled on the entire deep neural network, and cannot support conversion of a parallelism mode between operators.

For example, a hybrid parallelism manner 1: converting a channel (Channel) model parallelism to batch (batch) data parallelism is a parallel training manner commonly used by a deep learning recommendation model (deep learning recommendation model, DLRM). For the hybrid parallelism, the Mesh-Tensorflow method cannot support free switching of a parallelism mode between operators. However, in this application, a redistribution operator generation apparatus is used, so that any redistribution operator required for converting tensor layouts can be generated, and flexible sharding strategy configuration at an operator level can be supported.

For example, a hybrid parallelism manner 2: superimposing data parallelism and model parallelism is a common parallelism manner of a Transformer network. An existing solution cannot support full-dimension tensor sharding. Therefore, this sharding scenario cannot be supported. In this application, tensor sharding in each dimension may be supported.

Any specified parallelism policy, for example, conversion from data parallelism to model parallelism, may be supported by using the method provided in this application.

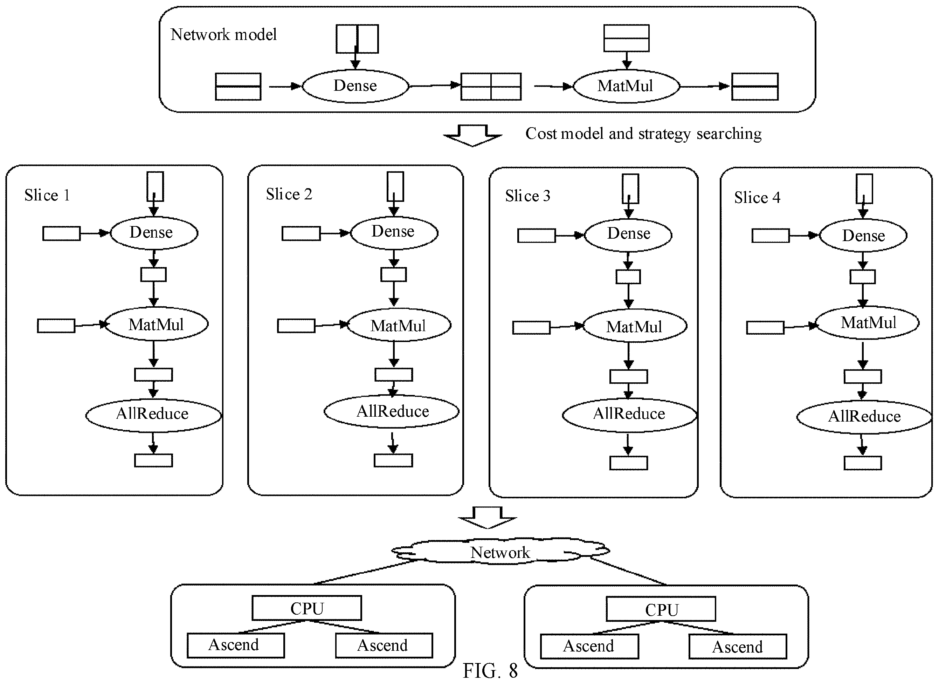

FIG. 8 is a schematic diagram of another embodiment of a data processing method according to an embodiment of this application.

FIG. 8 shows an overall procedure of the data processing method according to an embodiment of this application. A network model is searched by using a cost model and a parallelism policy. The parallelism policy may mix data parallelism and model parallelism. After a plurality of sliced computational graphs are obtained according to the parallelism policy, the plurality of sliced computational graphs are executed by a plurality of data processing devices in a distributed cluster by using a communication network.

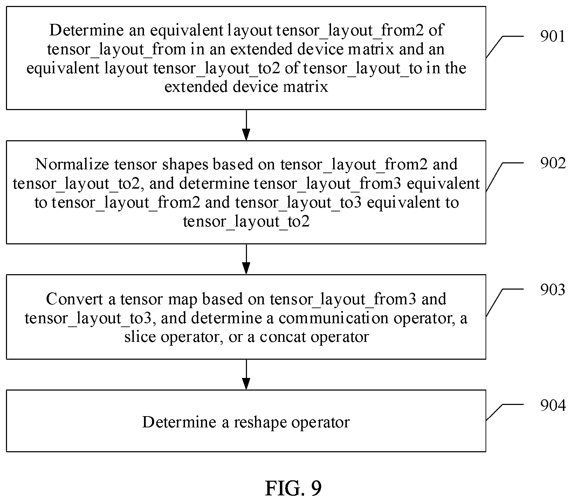

FIG. 9 is a schematic diagram of an embodiment of generating a redistribution operator according to an embodiment of this application.

It is assumed that a first operator and a second operator are two consecutive operators in a full forward graph of a deep neural network model, and a tensor layout (tensor_layout_from) of an output tensor of the first operator is inconsistent with a tensor layout (tensor_layout_to) of an input tensor of the second operator. In this case, the deep neural network model cannot perform sharding and execution based on the tensor layouts determined in step 602. In this embodiment of this application, a redistribution (redistribution) operator is inserted between the first operator and the second operator. The sliced computational graph is updated, so that an updated sliced computational graph can be executed.

That tensor layouts are inconsistent means that at least one of device matrices, tensor maps, and tensor shapes are different.

If device matrices of tensor_layout_from and tensor_layout_to are inconsistent, step 901 to step 905 are performed.

If the device matrices of tensor_layout_from and tensor_layout_to are consistent and tensor shapes are inconsistent, step 902 to step 905 are performed.

If the device matrices of tensor_layout_from and tensor_layout_to are consistent, the tensor shapes are consistent, and tensor maps are inconsistent, step 903 to step 905 are performed.

If the device matrices, the tensor maps, and the tensor shapes of tensor_layout_from and tensor_layout_to are all consistent, the redistribution operator does not need to be inserted between the first tensor and the second tensor.

901: The data processing device determines an equivalent layout tensor_layout_from2 of tensor_layout_from in an extended device matrix and an equivalent layout tensor_layout_to2 of tensor_layout_to in the extended device matrix.

The data processing device determines, based on the device matrix of tensor_layout_from and the device matrix of tensor_layout_to, a first equivalent tensor layout tensor_layout_from2 equivalent to tensor_layout_from and a second equivalent tensor layout tensor_layout_to2 equivalent to tensor_layout_to.

Optionally, an implementation method for determining tensor_layout_from2 and tensor_layout_to2 is as follows:

(1) On a basis that the device matrix of tensor_layout_from is different from the device matrix of tensor_layout_to, the data processing device determines a cumulative device matrix of a first device matrix and a cumulative device matrix of a second device matrix based on the first device matrix (device_matrix_from) $[A_0, A_1, ..., A_n]$ of tensor_layout_from and the second device matrix (device_matrix_to) $[B_0, B_1, ..., B_n]$. $A_0, A_1, ..., A_n$ are elements in the first device matrix, and n is a positive integer greater than or equal to 1. $B_0, B_1, ..., B_m$ are elements in the second device matrix, and m is a positive integer greater than or equal to 1.

The cumulative device matrix of the first device matrix $[A_0, A_1, ..., A_n]$ is $[A_0A_1...A_n, A_1...A_n, ..., A_n]$.

The cumulative device matrix of the second device matrix $[B_0, B_1, ..., B_m]$ is $[B_0B_1...B_n, B_1...B_n, ..., B_m]$.

For example, device_matrix_from = [2, 16], device_matrix_to = [4, 4, 2], a cumulative device matrix device_matrix_from_accum of device_matrix_from = [2 x 16, 16] = [32, 16], and a cumulative device matrix device_matrix_to_accum of device_matrix_to = [4 x 4 x 2, 4 x 2, 2] = [32, 8, 2].

(2) A minimum cumulative normalized extended device matrix device_matrix_equal2_accum is determined based on the cumulative device matrix of the first device matrix and the cumulative device matrix of the second device matrix.

The minimum cumulative normalized extended device matrix $[C_0C_1...Ck, C_1...C_k, ..., C_k]$ is obtained based on a union set device_matrix_equal2_accum of the cumulative device matrix of the first device matrix and the cumulative device matrix of the second device matrix, where k is a positive integer greater than or equal to 1, and $C_0C_1...C_k, C1...C_k, ..., C_k$ are elements in the minimum cumulative normalized extended device matrix. A quantity of elements is equal to k + 1, and is specifically a quantity of elements obtained after repeated elements are removed from the cumulative device matrix of the first device matrix and the cumulative device matrix of the second device matrix.

For example, the union set device_matrix_equal2_accum = [32, 16, 8, 2] is obtained based on the cumulative device matrix device_matrix_from_accum = [32, 16] of device_matrix_from and the cumulative device matrix device_matrix_to_accum = [32, 8, 2] of device_matrix_to.

(3) A minimum normalized extended device matrix is determined based on the minimum cumulative normalized extended device matrix.

The minimum normalized extended device matrix $[C_0, C_1, ..., C_k]$ is obtained based on the minimum cumulative normalized extended device matrix $[C_0C_1...C_k, C_1...C_k, ..., C_k]$.

For example, the minimum normalized extended device matrix device_matrix_equal2 = [2, 2, 4, 2] is obtained based on device_matrix_equal2_accum = [32, 16, 8, 2].

(4) The first equivalent tensor layout (tensor_layout_from2) of the first tensor and the second equivalent tensor layout (tensor_layout_to2) of the second tensor are determined based on the minimum normalized extended device matrix.

Specifically, the determining an equivalent tensor layout of a first tensor layout (tensor_layout_from) based on the minimum normalized extended device matrix includes:

It is assumed that tensor_layout_from is determined as follows:

tensor_shape = [s[N-1], s[N-2], ..., s[0]], where s[N-1], s[N-2], ..., s[0] are elements in the tensor shape;
device_matrix = [d[D-1], d[D-2], ..., d[0]], where d[D-1], d[D-2], ..., d[0] are elements in the device matrix; and
tensor_map = [m[N-1], m[N-2], ..., m[0]], where m[N-1], m[N-2], ..., m[0] are elements in the tensor map.

It is assumed that d[i] = mn in the device_matrix = [d[D-1], d[D-2], ..., d[0]] is extended, and an extended device matrix is device_matrix_e = [d[D-1], d[D-2], ..., d[i+1], m, n, ..., d[0]].

Whether m[k] = i exists in tensor_map is determined.

If m[k] = i exists in tensor_map, a tensor map of the equivalent tensor layout is:

tensor_map_e = [me[N], me[N–1], ..., me[k+1], me[k], ..., me[0]], where

$$me[w] = \begin{cases} m[w], & w < k \ and \ m[w] < i \\ m[w-1], & w > k+1 \ and \ m[w] < i \\ m[w]+1, & w < k \ and \ m[w] > i \\ m[w-1]+1, & w > k+1 \ and \ m[w] > i \\ m[w], & w = k \\ m[w]+1, & w = k+1 \end{cases}; \ and$$

a tensor shape of the equivalent tensor layout is:

tensor_shape_e = [se[N–1], se[N–2], ..., se[k+1], se[k], ..., se[0]], where se[N–1], se[N–2], ..., se[k+1], se[k], ..., se[0] are elements in tensor_shape_e,

se[k+1] = m,

se[k] = s[k]/m, and

$$se[w] = \begin{cases} s[w], & w < k \\ s[w-1], & w > k+1 \\ m, & w = k+1 \\ \frac{s[k]}{m}, & w = k \end{cases}$$

If m[k] = i does not exist in tensor_map, the tensor map and the tensor shape of the equivalent tensor layout remain unchanged.

Examples are as follows:

Example 1: An original tensor layout is tensor_shape = [512, 1024], device_matrix = [8, 4], and tensor_map = [1, 0]. tensor_map_e = [2, 1, 0] and tensor_shape_e = [4, 128, 1024] in the equivalent tensor layout are determined based on the minimum normalized extended device matrix device_matrix_e = [4, 2, 4].

Example 2: An original tensor layout is tensor_shape = [512, 1024], device_matrix = [8, 4], and tensor_map = [0, 1]. tensor_map_e = [0, 2, 1] and tensor_shape_e = [512, 4, 256] in the equivalent tensor layout are determined based on the minimum normalized extended device matrix device_matrix_e = [4, 2, 4].

Example 3: An original tensor layout is tensor_shape = [512, 1024], device_matrix = [8, 4], and tensor_map = [-1, 0]. tensor_map_e = [-1, 0] and tensor_shape_e = [512, 1024] in the equivalent tensor layout are determined based on the minimum normalized extended device matrix device_matrix_e = [4, 2, 4].

Example 4: An original tensor layout is tensor_shape = [512, 1024], device_matrix = [8, 4], and tensor_map = [-1, 1]. tensor_map_e = [-1, 2, 1] and tensor_shape_e = [512, 4, 256] in the equivalent tensor layout are determined based on the minimum normalized extended device matrix device_matrix_e = [4, 2, 4].

It should be noted that conversion between tensor_layout_from and tensor_layout_from2 may be implemented by using a reshape operator, and conversion between tensor_layout_to and tensor_layout_to2 may also be implemented by using a reshape operator.

902: The data processing device normalizes the tensor shapes based on tensor_layout_from2 and tensor_layout_to2, and determines a third equivalent tensor layout (tensor_layout_from3) equivalent to tensor_layout_from2 and a fourth equivalent tensor layout (tensor_layout_to3) equivalent to tensor_layout_to2.

If device matrices of the first equivalent tensor layout (tensor_layout_from2) and the second equivalent tensor layout (tensor_layout_to2) are consistent and tensor shapes are inconsistent, this step is performed. If the device matrices of tensor_layout_from2 and tensor_layout_to2 are consistent and the tensor shapes are consistent, step 903 is directly performed. Optionally, if the device matrices of tensor_layout_from and tensor_layout_to are consistent and the tensor shapes are inconsistent, step 901 may not be performed, and step 902 is directly performed. It may be considered that tensor_layout_from2 is equal to tensor_layout_from, and tensor_layout_to2 is equal to tensor_layout_to.

It is assumed that s[i] = mn in tensor_shape = [s[N–1], s[N-2], ..., s[0]] is extended, and an extended tensor shape is tensor_shape_e = [s[N-1], s[N-2], ..., s[i+1], m, n, s[i-1], ..., s[0]].

Whether d[m[i]] is greater than m is determined.

If d[m[i]] > m,

a device matrix of the equivalent tensor layout is:

device_matrix_e = [de[D], de[D–1], ..., de[0]], and

$$de[w] = \begin{cases} d[w], & w < m[i] \\ d[w-1], & w > m[i]+1 \\ m, & w = m[i]+1 \\ \frac{d[m[i]]}{m}, & w = m[i] \end{cases} ; \text{ and}$$

a tensor map of the equivalent tensor layout is:

tensor_map_e = [me[N], me[N–1], ..., me[i+1], me[i], ..., me[0]], where

$$me[w] = \begin{cases} m[w], & w < i \text{ and } m[w] < m[i] \\ m[w-1], & w > i+1 \text{ and } m[w] < m[i] \\ m[w]+1, & w < i \text{ and } m[w] > m[i] \\ m[w-1]+1, & w > i \text{ and } m[w] > m[i] \\ m[w], & w = i \\ m[w]+1, & w = i+1 \end{cases}$$

If d[m[i]] > m,

the device matrix of the equivalent tensor layout remains unchanged, and
the tensor map of the equivalent tensor layout is:

$$me[w] = \begin{cases} m[w], & w < i \\ m[w-1], & w > i+1 \\ m[w], & w = i \\ -1, & w = i+1 \end{cases}$$

Examples are as follows:

Example 1: A tensor layout before extension is tensor_shape = [512, 1024], device_matrix = [8, 4], and tensor_map = [1, 0]. device_matrix_e = [8, 2, 2] and tensor_map_e = [2, 1, 0] in the equivalent tensor layout are determined based on an extended tensor shape tensor_shape_e = [512, 2, 512].
Example 2: A tensor layout before extension is tensor_shape = [512, 1024], device_matrix = [8, 4], and tensor_map = [1, 0]. device_matrix_e = [8, 4] and tensor_map_e = [1, -1, 0] in the equivalent tensor layout are determined based on an extended tensor shape tensor_shape_e = [128, 4, 1024].

It should be noted that conversion between tensor_layout_from2 and tensor_layout_from3 may be implemented by using a reshape operator, and conversion between tensor_layout_to2 and tensor_layout_to3 may also be implemented by using a reshape operator.

Before step 903 is performed, it is first determined whether tensor maps of tensor_layout_from3 and tensor_layout_to3 are consistent. If yes, it indicates that shapes of tensor slices are the same, and step 903 is not performed. If no, it indicates that the shapes of the tensor slices are different, and the tensor map needs to be converted, that is, a tensor map conversion operator is inserted, and step 903 is performed.

903: Convert the tensor map based on the third equivalent tensor layout (tensor_layout_from3) of the first tensor and the fourth equivalent tensor layout (tensor_layout_to3) of the second tensor, and determine the tensor map conversion operator.

Device arrangements of tensor_layout_from3 and tensor_layout_to3 are consistent, tensor shapes are consistent, and tensor maps are inconsistent. Therefore, a tensor map conversion operator needs to be inserted between tensors whose tensor shapes are inconsistent, including a communication operator, a slice (slice) operator, or a concat operator. The communication operator includes an alltoall operator, an allgather operator, and the like. Optionally, if the device matrices of tensor_layout_from2 and tensor_layout_to2 are consistent, the tensor shapes are consistent, and tensor maps are inconsistent, step 902 may not be performed, and step 903 is directly performed. It may be considered that tensor_layout_from3 is equal to tensor_layout_from2, and tensor_layout_to3 is equal to tensor_layout_to2. Optionally, if the device matrices of tensor_layout_from and tensor_layout_to are consistent, the tensor shapes are consistent, and the tensor maps are inconsistent, step 901 and step 902 may not be performed, and step 903 is directly performed. It may be considered that tensor_layout_from3 is equal to tensor_layout_from, and tensor_layout_to3 is equal to tensor_layout_to.

The tensor map conversion operator may be used to implement conversion between tensors whose tensor maps are different, for example, conversion from tensor_layout_from3 to tensor_layout_to3. It may be understood that tensor layouts of an operator may be obtained when the communication operator, the slice operator, and the concat operator are generated.

Based on a specific case in which tensor maps are inconsistent, the data processing device generates one or more of the reshape operator, the slice operator, the alltoall operator, and the allgather operator.

Optionally, in this embodiment of this application, a tensor map conversion procedure is as follows:

(1) Whether there is conversion from non-sharding to sharding between tensor_map_from3 and tensor_map_to3 is first determined. Elements in the tensor map indicate mapping of each dimension of a tensor sharded on a device matrix. If a value of an element in the tensor map is greater than or equal to 0, it indicates a dimension of a corresponding device matrix. If the value of the element in the tensor map is -1, it indicates that a dimension of a tensor is not sharded in the device matrix. Therefore, if a corresponding element between tensor_map_from3 and tensor_map_to3 is converted from -1 to a value greater than or equal to 0, the slice slice operator is inserted.

For example, tensor_map_from3 is converted from (-1, -1, -1, 3, 2, 1, 0) to tensor_map_to3 (4, -1, -1, 3, 2, 1, 0), and an element in a dimension 0 changes from -1 to 4. In this case, a slice operator is inserted to slice a dimension 0 of a tensor.

(2) If element position conversion exists between tensor_map_from3 and tensor_map_to3, the communication operator (alltoall operator) is inserted.

For example, tensor_map is converted from (4, -1, -1, 3, 2, 1, 0) to (4, 3, -1, -1, 2, 1, 0). If elements in a dimension 1 and a dimension 3 are exchanged, the alltoall operator is inserted.

(3) Finally, conversion from sharding to non-sharding is performed. If the element has conversion from a value greater than or equal to 0 to -1, the communication operator (allgather operator) is inserted.

tensor_layout_from3 may be converted into tensor_layout_to3 based on a series of tensor map conversion operators.

904: Determine the reshape (reshape) operator.

The reshape operator is determined based on tensor_layout_from3 and tensor_layout_to3 obtained in step 902.

Whether slice shapes determined by tensor_layout_from and tensor_layout_from3 are consistent is determined. If not, a first reshape operator is inserted, where an input of the first reshape operator is tensor_layout_from, and an output of the first reshape operator is tensor_layout_from3.

Whether slice shapes determined by tensor_layout_to and tensor_layout_to3 are consistent is determined. If not, a second reshape operator is inserted, where an input of the second reshape operator is tensor_layout_to, and an output of the second reshape operator is tensor_layout_to3.

Example 1: tensor_shape_from = [1024, 512], and tensor_shape_from3 = [2, 256, 2, 2, 2, 2, 64]. The shapes are different. A slice shape tensor_shape_from_slice3 = [2, 256, 2, 1, 1, 1, 32] is obtained based on tensor_layout_from3. Therefore, a reshape operator is inserted at the beginning of a redistribution sequence, and a reshaped shape is tensor_shape_from_slice3.

Example 2: tensor_shape_to = [512, 1024], and tensor_shape_to3 = [2, 256, 2, 2, 2, 2, 64]. The shapes are different. A slice shape tensor_shape_from_slice = [128, 256] is obtained based on tensor_layout_to. Therefore, a reshape operator is inserted at the end of the redistribution sequence, and a reshaped shape is tensor_shape_from_slice.

Finally, the redistribution sequence may be determined. The redistribution sequence is an operator sequence inserted between the first operator and the second operator in sequence. The redistribution sequence includes one or more operators. A specific quantity is not limited herein. The redistribution sequence includes all redistribution operators determined according to step 901 to step 904, and includes one or more of the slice operator, the concat operator, the reshape operator, and the communication operator.

The first operator and the second operator are two consecutive operators in the full forward graph of the deep neural network model, and the tensor layout (tensor_layout_from) of the output tensor of the first operator is inconsistent with the tensor layout (tensor_layout_to) of the input tensor of the second operator. The tensor layout (tensor_layout_from) of the output tensor of the first operator may be converted into the tensor layout (tensor_layout_to) of the input tensor of the second operator based on the redistribution sequence.

A redistribution operator generation apparatus provided in this embodiment of this application may convert any tensor layout to generate a required redistribution operator. Based on a tensor layout expression, any tensor layout is converted into generate a redistribution operator. The generated operator sequence has lowest overheads.

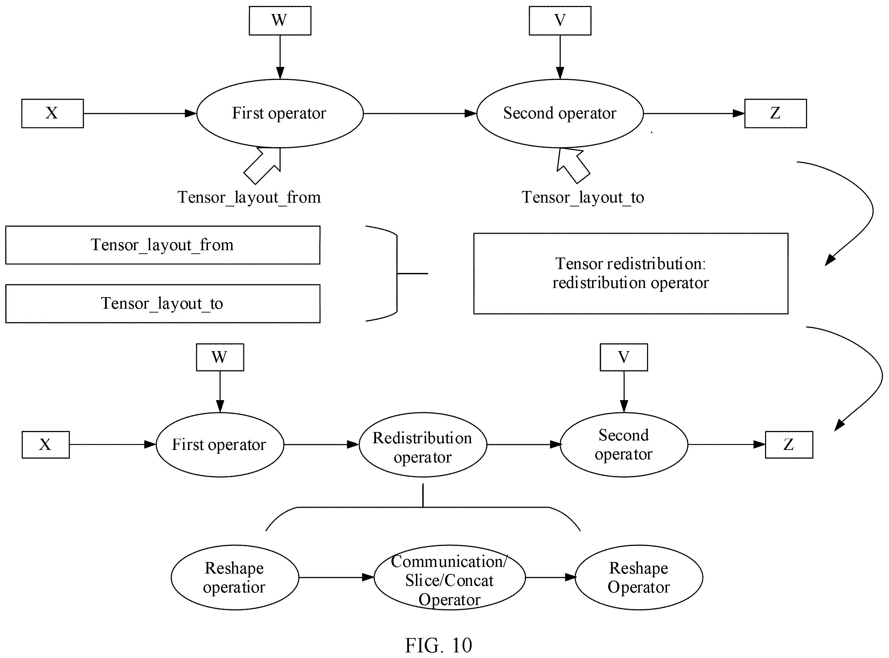

FIG. 10 is a schematic diagram of another embodiment of generating a redistribution operator according to an embodiment of this application.

It is assumed that a first operator and a second operator are two consecutive operators in a full forward graph of a deep neural network model, and a tensor layout (tensor_layout_from) of an output tensor of the first operator is inconsistent with a tensor layout (tensor_layout_to) of an input tensor of the second operator. Therefore, the deep neural network model cannot be executed based on the tensor layout. In this embodiment of this application, a redistribution operator is generated based on tensor_layout_from and tensor_layout_to. The redistribution (redistribution) operator is inserted between the first operator and the second operator to update the deep neural network model, so that an updated deep neural network model can be executed. The redistribution operator includes a reshape operator, a communication operator, a slice operator, a concat operator, and the like. The redistribution operator inserted between the first operator and the second operator may include one or more of the reshape operator, the communication operator, the slice operator, and the concat operator. This is not specifically limited.

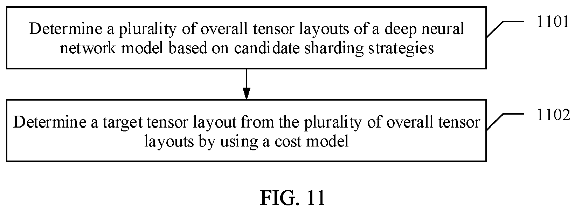

The data processing device determines an optimal sharding strategy from a plurality of candidate sharding strategies, and uses an overall tensor layout corresponding to the optimal sharding strategy to generate the sliced computational graph. Alternatively, the data processing device obtains, based on the plurality of candidate sharding strategies, an overall tensor layout corresponding to each candidate sharding strategy, to obtain a plurality of overall tensor layouts, and determines an optimal overall tensor layout from the plurality of overall tensor layouts to generate the sliced computational graph. FIG. 11 is a schematic diagram of an embodiment of determining an overall tensor layout according to an embodiment of this application.

1101: Determine the plurality of overall tensor layouts of the deep neural network model based on the candidate sharding strategies.

The data processing device may determine all tensors in the model based on the deep neural network model, and may further determine a tensor shape based on a quantity of elements of the tensor in each dimension.

The data processing device may further obtain device topology information of the distributed cluster, and the device topology information is used for cluster resource distribution of the deep neural network model, including a quantity of servers, a quantity of data processing devices on each server, and a connection relationship between the servers. The data processing device may be, for example, a GPU, a CPU, or a processor of another type. A specific type is not limited herein. The topology information may be used to obtain a total quantity of data processing devices in the distributed cluster, and the total quantity may be used to constrain a device matrix in tensor layout generation. The data processing device determines tensors of the first operator based on the full forward graph, where the tensors of the first operator include an input tensor and the output tensor. The data processing device determines, based on the quantity of devices and according to a preset rule, a same device matrix for an input tensor and an output tensor of each operator.

Different candidate sharding strategies may be determined in a traversal manner based on a tensor shape of each tensor and the device topology information, that is, a sharding manner of each tensor, including a quantity of slices of the tensor in each dimension, to determine mapping of slices of all the tensors in each dimension in the deep neural network model in a device cluster, that is, determine a device matrix and a tensor map of the tensor based on the sharding strategy, so as to obtain the plurality of overall tensor layouts of the deep neural network model. The overall tensor layout includes tensor layouts of input tensors of all operators in the deep neural network model and tensor layouts of output tensors of all the operators in the deep neural network model.

Similarly, all the candidate sharding strategies are traversed, to determine the overall tensor layout corresponding to each candidate sharding strategy.

Optionally, different preset rules are determined based on operator types, to determine an appropriate device matrix of operator tensors. Different types of operators are, for example, a matrix multiplication operator, a tensor addition operator, a convolution operator, and a flexible maximum value transfer function (softmax) operator.

Optionally, during deep neural network model training, data is parallel, that is, a tensor batch dimension is insensitive to a communication delay bandwidth compared with another dimension. Considering that a network communication bandwidth between a plurality of GPUs in a server is high and a communication delay is low, and a communication delay between servers is high, the batch dimension is preferably sharded to nodes in parallel, and a model dimension is sharded to nodes. Specifically, it is assumed that the device matrix is [D2, D1, D0]. (1) When the device matrix is constructed based on the device topology information of the distributed cluster, data processing devices inside a same server are preferably arranged along a D1/D2 axis direction, and then data processing devices between servers or inside a server are arranged along a D0 axis direction. (2) When a tensor is mapped to the device matrix, a dimension of the tensor is identified, and a batch dimension of the tensor is implicitly mapped to nodes, that is, a D0 dimension of the device matrix, namely, a non-batch dimension of the tensor, or the model dimension is mapped to a D1 or D2 dimension.

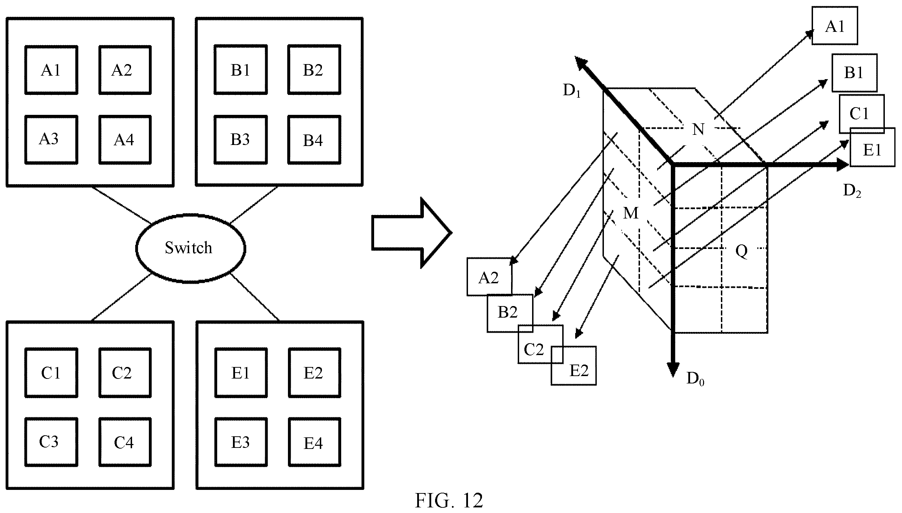

FIG. 12 is a schematic diagram of another embodiment of determining an overall tensor layout according to an embodiment of this application.

FIG. 12 shows a parallel modeling process of a two-dimensional matrix multiplication operator. There are 16 devices in total, and one device has four cards. Input tensors of the operator include a two-dimensional tensor M and a two-dimensional tensor N, and an output tensor of the operator is a two-dimensional tensor Q.

As shown in the figure, a first server has four data processing devices A1, A2, A3, and A4, a second server has four data processing devices B1, B2, B3, and B4, a third server has four data processing devices C1, C2, C3, and C4, and a fourth server has four data processing devices E1, E2, E3, and E4. Each element in a device matrix, that is, each cube in the figure, corresponds to one data processing device. All elements in the device matrix are all data processing devices in the distributed cluster configured to execute the deep neural network model in this application. In the figure, a device matrix [D2, D1, D0] is [2, 2, 4].

The tensor M is mapped to D0 and D1 planes. It is assumed that a row of the tensor M is a sample dimension, and the row is mapped to a D0 dimension. The sample dimension has a lower requirement on communication. Correspondingly, data processing devices between servers are arranged in the D0 dimension, and devices inside the servers are arranged in other dimensions. For example, A1, B1, C1, and E1 are data processing devices in different servers, and therefore are arranged along a D0 axis of the device matrix. A1 and A2 are two data processing devices inside a same server, and therefore are arranged along a D1 axis or a D2 axis.

Therefore, this solution is designed for different bandwidths between devices. The device matrix is used to express a cluster topology relationship, which can flexibly adapt to various hierarchical combined network topology structures. A communication delay is reduced.

1102: Determine a target tensor layout from the plurality of overall tensor layouts by using the cost model.

The sharding strategy is determined from the plurality of candidate sharding strategies, tensor layouts of each operator in the deep neural network model are obtained based on the candidate sharding strategy, and a redistribution operator between consecutive tensors with different tensor layouts is generated. Therefore, the tensor layouts of all the operators in the deep neural network model may be obtained, which are referred to as an overall tensor layout for short. It may be understood that the plurality of overall tensor layouts may be obtained based on the sharding strategies.

The cost model (cost model) is calculated based on each overall tensor layout. The cost model considers operator overheads and redistribution operator overheads. Specifically, the tensor shape is used to approximate measurement of storage overheads, computation overheads, and communication overheads of the operator. A weight coefficient is used to control proportions of the computation overheads and the communication overheads in a loss function to adapt to different device platforms. A candidate sharding strategy with a minimum cost model is determined from the plurality of candidate sharding strategies as the target sharding strategy, to perform graph slicing.

Optionally, the optimal overall tensor layout is determined from the plurality of overall tensor layouts, to perform the embodiment corresponding to FIG. 6.

Optionally, an optimal sharding strategy is determined based on the plurality of overall tensor layouts, and the overall tensor layout is generated based on the optimal sharding strategy and according to the preset rule, to perform the embodiment corresponding to FIG. 6.

Optionally, a complete single-machine forward computational graph is input, a sliced computational forward graph is output, and a redistribution operator is inserted into the sliced forward graph. The output sliced computational forward graph generates a backward computational graph through automatic differentiation.

Optionally, the candidate sharding strategy with a minimum loss in the plurality of candidate sharding strategies determined by using the cost model is determined based on a value obtained by performing weighted summation on a size of a data tensor in the overall tensor layout, a size of a communication tensor in the overall tensor layout, and a size of a parameter tensor in the overall tensor layout, and a weight coefficient of the size of the data tensor, a weight coefficient of the size of the communication tensor, and a weight coefficient of the size of the parameter tensor. The size of the data tensor, the size of the communication tensor, and the size of the parameter tensor are respectively storage space of the data tensor, storage space of the communication tensor, and storage space of the parameter tensor that are required to execute the deep neural network model based on the first candidate sharding strategy.

Loss function defined by a cost model = alpha x size of a data tensor of an input operator + beta x size of a communication tensor + gamma x size of a parameter tensor of the operator, where

alpha represents a weight coefficient of the size of the data tensor, beta represents a weight coefficient of the size of the communication tensor, and gamma represents a weight coefficient of the size of the parameter tensor. Specific values of alpha, beta, and gamma are not limited herein. Optionally, values of alpha, beta, and gamma may be flexibly set based on different types of data processing devices.

Operators in a cost model include a redistribution operator sequence. For different sharding strategies, overheads of operators are different, and overheads of redistribution operator sequences between operators are also different. The overheads herein include storage overheads and communication overheads. A storage overhead upper limit is set based on an actual memory size of a device, and an operator sharding strategy combination with minimum computation overheads is searched for.

Optionally, storage overheads and computation overheads are approximately estimated based on shapes of tensors input by forward and reverse operators. A proportion relationship between alpha, beta, and gamma is adjusted to adapt to different hardware platforms. For example, increasing beta means increasing a proportion of the communication overheads and reducing a communication volume required by a found policy.

According to a method for determining the overall tensor layout provided in this embodiment of this application, an operator may be independently modeled, and a tensor layout of an input tensor of the operator and a tensor layout of an output tensor of the operator are configured. A redistribution operator generation module generates the redistribution operator required for tensor layout conversion between operators. The cost model considers both the operator overheads and the redistribution operator overheads, and uses the tensor shape to approximate the storage overheads, the computation overheads, and the communication overheads of the operator. The weight coefficient is used to control the proportions of the computation overheads and the communication overheads in the loss function to adapt to different device platforms. Optionally, in this solution, the complete single-machine forward computational graph may be input, the sliced computational forward graph may be output, and other operators such as the redistribution operator and an AllReduce operator may be inserted into the sliced forward graph. The output sliced computational forward graph generates the backward computational graph through automatic differentiation.

According to the method for determining the overall tensor layout provided in this embodiment of this application, with reference to flexible configuration of a parallelism mode of an overall automatic parallel procedure provided in the embodiments corresponding to FIG. 6 and FIG. 9, each operator is independently modeled, and a redistribution operator sequence is inserted between operators. This can adapt to requirements of various common networks for hybrid parallelism, and compensate for a disadvantage of supporting a network type in the conventional technology. The cost model considers both the operator overheads and the redistribution overheads, and can search for a parallelism solution with minimum overall overheads. The tensor shape is used to approximate the computation overheads, and approximate actual overheads without a large number of tests, achieving platform-independent. The weight coefficient is used to control the proportion of communication calculation to adapt to different device platforms. There is no need to generate a reverse computing network, and use automatic differentiation and graph optimization functions. Tensor redistribution supports conversion of any tensor layout, and conversion overheads are low. Support of conversion of any tensor layout enables independent and flexible modeling of an operator. Tensor redistribution may be used for distribution and conversion between operators and distributed implementation of reshape operators. In topology-aware scheduling in this application, a device matrix in a Tensor Layout is adjusted, so that batch dimensions that are insensitive to communication delay and bandwidth are placed between servers in parallel, and the model is sharded into slices and the slices are placed inside the servers. The device matrix is configured to easily and flexibly adapt to different cluster topologies.

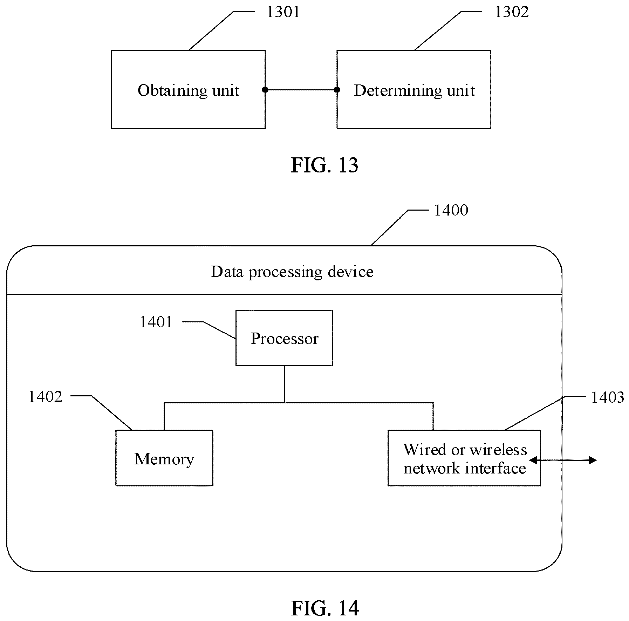

FIG. 13 is a schematic diagram of an embodiment of a data processing device according to an embodiment of this application.

The data processing device provided in this embodiment of this application is applied to a distributed cluster, and the device includes:

an obtaining unit 1301, configured to obtain a deep neural network model, a tensor layout of an input tensor of each operator in the deep neural network model, and a tensor layout of an output tensor of the operator in the deep neural network model, where the tensor layout includes a device matrix, a tensor map, and a tensor shape; the deep neural network model includes a first operator and a second operator, and the first operator and the second operator are two consecutive operators in the deep neural network model; and an output tensor of the first operator is an input tensor of the second operator, and a first tensor layout is inconsistent with a second tensor layout, where the first tensor layout is a tensor layout of the output tensor of the first operator, and the second tensor layout is a tensor layout of the input tensor of the second operator; and

a determining unit 1302, configured to determine a sliced computational graph based on the tensor layout of the input tensor of each operator and the tensor layout of the output tensor of the operator, where

the determining unit 1302 is further configured to determine a redistribution operator between the first operator and the second operator, where the redistribution operator is used to convert the first tensor layout into the second tensor layout; and

the determining unit 1302 is further configured to insert the redistribution operator into the sliced computational graph, to determine an updated sliced computational graph, where the updated sliced computational graph is used to indicate to execute a part of the deep neural network model.

Optionally, a device matrix of the first tensor layout is inconsistent with a device matrix of the second tensor layout, and/or a tensor map of the first tensor layout is inconsistent; and the determining unit 1302 is specifically configured to:

determine an intermediate tensor layout based on the first tensor layout and the second tensor layout;
determine a first reshape operator based on the first tensor layout and the intermediate tensor layout, a tensor layout of an input tensor of the first reshape operator, and a tensor layout of an output tensor of the first reshape operator, where the first reshape operator is used to implement conversion from the first tensor layout to the intermediate tensor layout; and/or

determine a second reshape operator based on the second tensor layout and the intermediate tensor layout, a tensor layout of an input tensor of the second reshape operator, and a tensor layout of an output tensor of the second reshape operator, where the second reshape operator is located between the first reshape operator and the second operator, and the second reshape operator is used to implement conversion from the intermediate tensor layout to the second tensor layout.

Optionally, the device matrix of the first tensor layout is inconsistent with the device matrix of the second tensor layout;

the determining unit 1302 is specifically configured to:

determine an extended device matrix based on the device matrix of the first tensor layout and the device matrix of the second tensor layout, where a product of elements in the extended device matrix is the same as a product of elements in a device matrix of the output tensor of the first operator, and is the same as a product of elements in a second device matrix of the input tensor of the second operator; and any element in each of the device matrix of the first tensor layout and the device matrix of the second tensor layout is equal to one element in the extended device matrix or a product of at least two elements in the extended device matrix; and

determine, based on the extended device matrix, a first equivalent tensor layout equivalent to the first tensor layout and a second equivalent tensor layout equivalent to the second tensor layout, where a device matrix of the first equivalent tensor layout is consistent with a device matrix of the second equivalent tensor layout; and

when a tensor shape of the first equivalent tensor layout is consistent with a tensor shape of the second equivalent tensor layout, the intermediate tensor layout includes the first equivalent tensor layout and the second equivalent tensor layout, and the tensor shape is a quantity of elements of a tensor in each dimension.

Optionally, the tensor shape of the first equivalent tensor layout is consistent with the tensor shape of the second equivalent tensor layout, and a tensor map of the first equivalent tensor layout is inconsistent with a tensor map of the second equivalent tensor layout; and

the determining unit 1302 is further configured to determine one or more tensor map conversion operators, where the tensor map conversion operator includes a slice operator, a concat operator, or a communication operator, a tensor layout of an input tensor of the one or more tensor map conversion operators is consistent with the first equivalent tensor layout, a tensor layout of an output tensor of the one or more tensor map conversion operators is consistent with the second equivalent tensor layout, and the one or more tensor map conversion operators are used to determine the updated sliced computational graph.

Optionally, when the tensor shape of the first equivalent tensor layout is inconsistent with the tensor shape of the second equivalent tensor layout, the determining unit 1302 is further configured to: normalize the tensor shapes based on the first equivalent tensor layout and the second equivalent tensor layout, and determine a third equivalent tensor layout equivalent to the first equivalent tensor layout and a fourth equivalent tensor layout equivalent to the second equivalent tensor layout, where a device matrix of the third equivalent tensor layout is consistent with a device matrix of the fourth equivalent tensor layout, and a tensor shape of the third equivalent tensor layout is consistent with a tensor shape of the fourth equivalent tensor layout; and the intermediate tensor layout includes the third equivalent tensor layout and the fourth equivalent tensor layout.

Optionally, a tensor map of the third equivalent tensor layout is inconsistent with a tensor map of the fourth equivalent tensor layout; and

the determining unit 1302 is further configured to determine one or more tensor map conversion operators, where the tensor map conversion operator includes a slice operator, a concat operator, or a communication operator, a tensor layout of an input tensor of the one or more tensor map conversion operators is consistent with the third equivalent tensor layout, a tensor layout of an output tensor of the one or more tensor map conversion operators is consistent with the fourth equivalent tensor layout, and the one or more tensor map conversion operators are used to determine the updated sliced computational graph.

Optionally, the device matrix of the first tensor layout is consistent with the device matrix of the second tensor layout, and the tensor shape of the first tensor layout is inconsistent with the tensor shape of the second tensor layout; and

the determining unit 1302 is specifically configured to determine, based on the first tensor layout and the second tensor layout, a fifth equivalent tensor layout equivalent to the first tensor layout and a sixth equivalent tensor layout equivalent to the second equivalent tensor layout, where a device matrix of the fifth equivalent tensor layout is consistent with a device matrix of the sixth equivalent tensor layout, and a tensor shape of the fifth equivalent tensor layout is consistent with a tensor shape of the sixth equivalent tensor layout; and the intermediate tensor layout includes the fifth equivalent tensor layout and the sixth equivalent tensor layout.

Optionally, a tensor map of the fifth equivalent tensor layout is inconsistent with a tensor map of the sixth equivalent tensor layout; and

the determining unit 1302 is further configured to determine one or more tensor map conversion operators, where the tensor map conversion operator includes a slice operator, a concat operator, or a communication operator, a tensor layout of an input tensor of the one or more tensor map conversion operators is consistent with the fifth equivalent tensor layout, a tensor layout of an output tensor of the one or more tensor map conversion operators is consistent with the sixth equivalent tensor layout, and the one or more tensor map conversion operators are used to determine the updated sliced computational graph.

Optionally, a device matrix of the first tensor layout is consistent with a device matrix of the second tensor layout, a tensor shape of the first tensor layout is consistent with a tensor shape of the second tensor layout, and a tensor map of the first tensor layout is inconsistent with a tensor map of the second tensor layout; and

the determining unit 1302 is specifically configured to:

determine one or more tensor map conversion operators, where the tensor map conversion operator includes a slice operator, a concat operator, or a communication operator, and the one or more tensor map conversion operators are used to input the output tensor of the first operator and output the input tensor of the second operator.

Optionally, the obtaining unit 1301 is specifically configured to:

obtain the deep neural network model and a sharding strategy, where the sharding strategy includes a quantity of slices of a tensor of the deep neural network model in each dimension; and

the determining module is specifically configured to determine the tensor layout of the input tensor of each operator in the deep neural network model and the tensor layout of the output tensor of the operator in the deep neural network model based on the deep neural network model and the sharding strategy.

Optionally, the sharding strategy includes a first sharding strategy and a second sharding strategy; and

the determining unit 1302 is specifically configured to:

determine a first overall tensor layout corresponding to the first sharding strategy and a second overall tensor layout corresponding to the second sharding strategy, where the first overall tensor layout includes a tensor layout of an input tensor of each operator in the deep neural network model and a tensor layout of an output tensor of the operator in the deep neural network model that are determined based on the first sharding strategy, and the second overall tensor layout includes a tensor layout of an input tensor of each operator in the deep neural network model and a tensor layout of an output tensor of the operator in the deep neural network model that are determined based on the second sharding strategy; and

determine, from the first overall tensor layout and the second overall tensor layout, that the first overall tensor layout includes the tensor layout of the input tensor of each operator in the deep neural network model and the tensor layout of the output tensor of the operator in the deep neural network model, where a sum of communication time and computation time required for training the deep neural network model based on the first overall tensor layout is less than a sum of communication time and computation time required for training the deep neural network model based on the second overall tensor layout.

Optionally, a cost model of the first overall tensor layout is less than a cost model of the second overall tensor layout, and the cost model of the first overall tensor layout is a value obtained by performing weighted summation based on a size of a data tensor in the first overall tensor layout, a size of a communication tensor in the first overall tensor layout, and a size of a parameter tensor in the first overall tensor layout, and a weight coefficient of the size of the data tensor, a weight coefficient of the size of the communication tensor, and a weight coefficient of the size of the parameter tensor; and the cost model of the second overall tensor layout is a value obtained by performing weighted summation based on a size of a data tensor in the second overall tensor layout, a size of a communication tensor in the second overall tensor layout, and a size of a parameter tensor in the second overall tensor layout, and a weight coefficient of the size of the data tensor, a weight coefficient of the size of the communication tensor, and a weight coefficient of the size of the parameter tensor.

Optionally, the sharding strategy is a sharding strategy specified by a user.

Optionally, the input tensor of each operator in the deep neural network model includes a training dataset, and the training dataset includes a text dataset, an image dataset, or an audio dataset.

FIG. 14 is a schematic diagram of another embodiment of a data processing device according to an embodiment of this application.

The data processing device provided in this embodiment may be a processor, a server, a dedicated data processing device, or the like. A specific form of the device is not limited in this embodiment of this application.

The data processing device 1400 may differ greatly due to different configurations or performance, and may include one or more processors 1401 and one or more memories 1402. The memory 1402 stores a program or data.

The memory 1402 may be a volatile memory or a non-volatile memory. Optionally, the processor 1401 is one or more central processing units (central processing unit, CPU), a graphics processing unit (graphics processing unit, GPU), or another dedicated processor, for example, Ascend (Ascend). The CPU may be a single-core CPU, or may be a multi-core CPU. The processor 1401 may communicate with the memory 1402, and execute, on the data processing device 1400, a series of instructions in the memory 1402.

The data processing device 1400 further includes one or more wired or wireless network interfaces 1403, for example, an Ethernet interface.

Optionally, although not shown in FIG. 14, the data processing device 1400 may further include one or more power supplies and one or more input/output interfaces. The input/output interface may be configured to connect to a display, a mouse, a keyboard, a touchscreen device, a sensor device, or the like. The input/output interface is an optional component, and may exist or may not exist. This is not limited herein.

For a procedure performed by the processor 1401 in the data processing device 1400 in this embodiment, refer to the method procedure described in the method embodiments. Details are not described herein again.

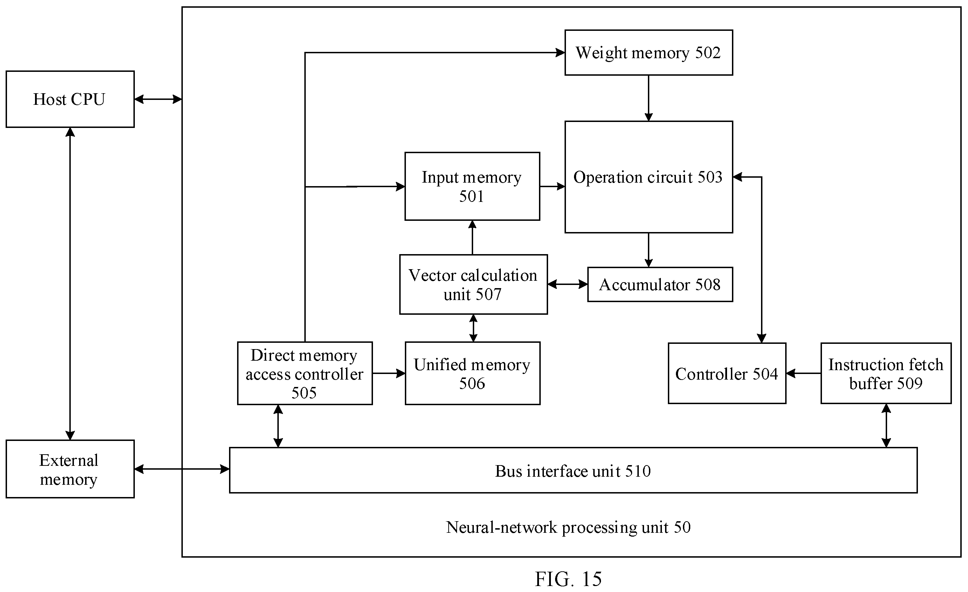

FIG. 15 is a diagram of a hardware structure of a chip according to an embodiment of this application.

An algorithm of the deep neural network in embodiments of this application may be executed in an NPU chip shown in FIG. 15.

A neural-network processing unit NPU 50 NPU, as a coprocessor, is mounted to a host CPU (Host CPU), and the host CPU allocates a task. A core part of the NPU is an operation circuit 503, and a controller 504 controls the operation circuit 503 to extract matrix data in a memory and perform a multiplication operation.

In some implementations, the operation circuit 503 includes a plurality of processing engines (processing engine, PE). In some implementations, the operation circuit 503 is a two-dimensional systolic array. Alternatively, the operation circuit 503 may be a one-dimensional systolic array or another electronic circuit that can perform mathematical operations such as multiplication and addition. In some implementations, the operation circuit 503 is a general-purpose matrix processor.

For example, it is assumed that there are an input matrix A, a weight matrix B, and an output matrix C. The operation circuit extracts corresponding data of the matrix B from a weight memory 502, and buffers the corresponding data into each PE in the operation circuit. The operation circuit extracts data of the matrix A from an input memory 501, to perform a matrix operation on the matrix B, and a partial result or a final result of an obtained matrix is stored in an accumulator accumulator 508.

A unified memory 506 is configured to store input data and output data. Weight data is transferred to the weight memory 502 by using a direct memory access controller (direct memory access controller, DMAC) 505. The input data is also transferred to the unified memory 506 by using the DMAC.

A BIU is a bus interface unit, in other words, a bus interface unit 510, and is configured to perform interaction between an AXI bus, and the DMAC and an instruction fetch buffer (Instruction Fetch Buffer) 509.

The bus interface unit (bus interface unit, BIU for short) 510 is used by the instruction fetch buffer 509 to obtain instructions from an external memory, and is further used by the direct memory access controller 505 to obtain original data of the input matrix A or the weight matrix B from the external memory.

The DMAC is mainly configured to transfer input data in the external memory DDR to the unified memory 506, or transfer the weight data to the weight memory 502, or transfer the input data to the input memory 501.

A vector calculation unit 507 may include a plurality of operation processing units. If required, further processing is performed on an output of the operation circuit, for example, vector multiplication, vector addition, an exponential operation, a logarithmic operation, or size comparison. The vector calculation unit 507 is mainly configured to perform network computing at a non-convolution/FC layer in a neural network, for example, Pooling (pooling), Batch Normalization (batch normalization), or Local Response Normalization (local response normalization).

In some implementations, the vector calculation unit 507 can store a processed output vector in the uniform memory 506. For example, the vector calculation unit 507 may apply a non-linear function to an output, for example, a vector of an accumulated value, of the operation circuit 503 to generate an activation value. In some implementations, the vector calculation unit 507 generates a normalized value, a combined value, or both a normalized value and a combined value. In some implementations, the processed output vector can be used as an activation input for the operation circuit 503, for example, used in a subsequent layer in the neural network.

The instruction fetch buffer (instruction fetch buffer) 509 connected to the controller 504 is configured to store instructions used by the controller 504.

The unified memory 506, the input memory 501, the weight memory 502, and the instruction fetch buffer 509 are all on-chip memories. The external memory is private for the NPU hardware architecture.

An operation of each layer in the deep neural network, that is, an operator in this embodiment of this application, may be performed by the matrix calculation unit or the vector calculation unit 507.

The foregoing method embodiment of this application may be applied to the processor, or the processor implements the steps of the foregoing method embodiment. The processor may be an integrated circuit chip and has a signal processing capability. In an implementation process, steps in the foregoing method embodiments can be implemented by using a hardware integrated logical circuit in the processor, or by using instructions in a form of software.

The processor may be a central processing unit (central processing unit, CPU), a network processor (network processor, NP), a combination of a CPU and an NP, a digital signal processor (digital signal processor, DSP), an application-specific integrated circuit (application specific integrated circuit, ASIC), a field programmable gate array (field programmable gate array, FPGA) or another programmable logic device, a discrete gate or a transistor logic device, or a discrete hardware component. The methods, the steps, and logical block diagrams that are disclosed in this application may be implemented or performed. A general-purpose processor may be a microprocessor, or the processor may be any conventional processor or the like. Steps of the methods disclosed in this application may be directly executed and completed by using a hardware decoding processor, or may be executed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. Although only one processor is shown in the figure, the apparatus may include a plurality of processors, or the processor includes a plurality of processing units. Specifically, the processor may be a single-core (single-CPU) processor, or may be a multi-core (multi-CPU) processor.

The memory is configured to store computer instructions executed by the processor. The memory may be a storage circuit, or may be a memory. The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. The memory may be independent of the processor, or may be a storage unit in the processor. This is not limited herein. Although only one memory is shown in the figure, the apparatus may alternatively include a plurality of memories, or the memory includes a plurality of storage units.

A transceiver is configured to implement content interaction between the processor and another unit or network element. Specifically, the transceiver may be a communication interface of the apparatus, or may be a transceiver circuit or a communication unit. The transceiver may alternatively be a communication interface or a transceiver circuit of the processor. In a possible implementation, the transceiver may be a transceiver chip. The transceiver may further include a sending unit and/or a receiving unit. In a possible implementation, the transceiver may include at least one communication interface. In another possible implementation, the transceiver may alternatively be a unit implemented in a form of software. In each embodiment of this application, the processor may interact with another unit or network element through the transceiver. For example, the processor obtains or receives content from another network element through the transceiver. If the processor and the transceiver are two physically separated components, the processor may exchange content with another unit of the apparatus without using the transceiver.

In a possible implementation, the processor, the memory, and the transceiver may be connected to each other through a bus. The bus may be a peripheral component interconnect (peripheral component interconnect, PCI) bus or an extended industry standard architecture (extended industry standard architecture, EISA) bus, or the like. The bus may be classified into an address bus, a data bus, a control bus, and the like.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a relative concept in a specific manner.

In embodiments of this application, for ease of understanding, a plurality of examples are used for description. However, these examples are merely examples, but this does not mean that these examples are optimal implementations for implementing this application.

All or some of the foregoing embodiments may be implemented by using software, hardware, firmware, or any combination thereof. When the software is used for implementation, all or some of the embodiments may be implemented in a form of a computer program product.

The computer program product includes one or more computer instructions. When the computer-executable instructions are loaded and executed on a computer, all or some of the procedures or the functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid State Disk (SSD)), or the like.

**Claims**

1. A data processing method applied to a distributed cluster, wherein the method comprises:

   obtaining a deep neural network model, a tensor layout of an input tensor of at least one operator in the deep neural network model, and a tensor layout of an output tensor of the at least one operator in the deep neural network model, wherein the tensor layout comprises a device matrix, a tensor map, and a tensor shape; the deep neural network model comprises a first operator and a second operator; and an output tensor of the first operator is an input tensor of the second operator, and a first tensor layout is inconsistent with a second tensor layout, wherein the first tensor layout is a tensor layout of the output tensor of the first operator, and the second tensor layout is a tensor layout of the input tensor of the second operator; and

   inserting an redistribution operator in a sliced computational graph of a data processing device, to determine an updated sliced computational graph, wherein the redistribution operator is between the first operator and the second operator in the sliced computational graph, and the redistribution operator is used to convert the first tensor layout to the second tensor layout, and wherein the updated sliced computational graph indicates to execute a part of the deep neural network model.

2. The method according to claim 1, wherein

   a device matrix of the first tensor layout is inconsistent with a device matrix of the second tensor layout, and/or a tensor map of the first tensor layout is inconsistent with a tensor map of the second tensor layout; and
   the determining a redistribution operator between the first operator and the second operator comprises:

   determining an intermediate tensor layout based on the first tensor layout and the second tensor layout;
   determining a first reshape operator based on the first tensor layout and the intermediate tensor layout, a tensor layout of an input tensor of the first reshape operator, and a tensor layout of an output tensor of the first reshape operator, wherein the first reshape operator is used to convert the first tensor layout to the intermediate tensor layout; and/or
   determining a second reshape operator based on the second tensor layout and the intermediate tensor layout, a tensor layout of an input tensor of the second reshape operator, and a tensor layout of an output tensor of the second reshape operator, wherein the second reshape operator is located between the first reshape operator and the second operator, and the second reshape operator is used to convert the intermediate tensor layout to the second tensor layout.

3. The method according to claim 2, wherein

   the device matrix of the first tensor layout is inconsistent with the device matrix of the second tensor layout;
   the determining an intermediate tensor layout based on the first tensor layout and the second tensor layout comprises:

   determining an extended device matrix based on the device matrix of the first tensor layout and the device matrix of the second tensor layout, wherein a product of elements in the extended device matrix is the same as a product of elements in a device matrix of the output tensor of the first operator, and is the same as a product of elements in a second device matrix of the input tensor of the second operator; and any element in each of the device matrix of the first tensor layout and the device matrix of the second tensor layout is equal to one element in the extended device matrix or a product of at least two elements in the extended device matrix; and
   determining, based on the extended device matrix, a first equivalent tensor layout equivalent to the first tensor layout and a second equivalent tensor layout equivalent to the second tensor layout, wherein a device matrix of the first equivalent tensor layout is consistent with a device matrix of the second equivalent tensor layout; and
   when a tensor shape of the first equivalent tensor layout is consistent with a tensor shape of the second equivalent tensor layout, the intermediate tensor layout comprises the first equivalent tensor layout and the second equivalent tensor layout, and the tensor shape is a quantity of elements of a tensor in each dimension.

4. The method according to claim 3, wherein the tensor shape of the first equivalent tensor layout is consistent with the tensor shape of the second equivalent tensor layout, and a tensor map of the first equivalent tensor layout is inconsistent with a tensor map of the second equivalent tensor layout; and
the method further comprises:
determining one or more tensor map conversion operators, wherein the tensor map conversion operator comprises a slice operator, a concat operator, or a communication operator, a tensor layout of an input tensor of the one or more tensor map conversion operators is consistent with the first equivalent tensor layout, a tensor layout of an output tensor of the one or more tensor map conversion operators is consistent with the second equivalent tensor layout, and the one or more tensor map conversion operators are used to determine the updated sliced computational graph.

5. The method according to claim 3, wherein when the tensor shape of the first equivalent tensor layout is inconsistent with the tensor shape of the second equivalent tensor layout, the method further comprises:
normalizing the tensor shapes based on the first equivalent tensor layout and the second equivalent tensor layout, and determining a third equivalent tensor layout equivalent to the first equivalent tensor layout and a fourth equivalent tensor layout equivalent to the second equivalent tensor layout, wherein a device matrix of the third equivalent tensor layout is consistent with a device matrix of the fourth equivalent tensor layout, and a tensor shape of the third equivalent tensor layout is consistent with a tensor shape of the fourth equivalent tensor layout; and the intermediate tensor layout comprises the third equivalent tensor layout and the fourth equivalent tensor layout.

6. The method according to claim 5, wherein

a tensor map of the third equivalent tensor layout is inconsistent with a tensor map of the fourth equivalent tensor layout; and
the method further comprises:
determining one or more tensor map conversion operators, wherein the tensor map conversion operator comprises a slice operator, a concat operator, or a communication operator, a tensor layout of an input tensor of the one or more tensor map conversion operators is consistent with the third equivalent tensor layout, a tensor layout of an output tensor of the one or more tensor map conversion operators is consistent with the fourth equivalent tensor layout, and the one or more tensor map conversion operators are used to determine the updated sliced computational graph.

7. The method according to claim 2, wherein

the device matrix of the first tensor layout is consistent with the device matrix of the second tensor layout, and the tensor shape of the first tensor layout is inconsistent with the tensor shape of the second tensor layout; and
the determining an intermediate tensor layout based on the first tensor layout and the second tensor layout comprises:
determining, based on the first tensor layout and the second tensor layout, a fifth equivalent tensor layout equivalent to the first tensor layout and a sixth equivalent tensor layout equivalent to the second tensor layout, wherein a device matrix of the fifth equivalent tensor layout is consistent with a device matrix of the sixth equivalent tensor layout, and a tensor shape of the fifth equivalent tensor layout is consistent with a tensor shape of the sixth equivalent tensor layout; and the intermediate tensor layout comprises the fifth equivalent tensor layout and the sixth equivalent tensor layout.

8. The method according to claim 7, wherein

a tensor map of the fifth equivalent tensor layout is inconsistent with a tensor map of the sixth equivalent tensor layout; and
the method further comprises:
determining one or more tensor map conversion operators, wherein the tensor map conversion operator comprises a slice operator, a concat operator, or a communication operator, a tensor layout of an input tensor of the one or more tensor map conversion operators is consistent with the fifth equivalent tensor layout, a tensor layout of an output tensor of the one or more tensor map conversion operators is consistent with the sixth equivalent tensor layout, and the one or more tensor map conversion operators are used to determine the updated sliced computational graph.

9. The method according to claim 1, wherein a device matrix of the first tensor layout is consistent with a device matrix of the second tensor layout, a tensor shape of the first tensor layout is consistent with a tensor shape of the second tensor layout, and a tensor map of the first tensor layout is inconsistent with a tensor map of the second tensor layout with a tensor map of the second tensor layout; and

the determining a redistribution operator between the first operator and the second operator comprises:
determining one or more tensor map conversion operators, wherein the tensor map conversion operator comprises a slice operator, a concat operator, or a communication operator, and the one or more tensor map conversion operators are used to input the output tensor of the first operator and output the input tensor of the second operator.

10. The method according to any one of claims 1 to 9, wherein
the obtaining a deep neural network model, a tensor layout of an input tensor of each operator in the deep neural network model, and a tensor layout of an output tensor of the operator in the deep neural network model comprises:

obtaining the deep neural network model and a sharding strategy, wherein the sharding strategy comprises a quantity of slices of a tensor of the deep neural network model in each dimension; and
determining the tensor layout of the input tensor of each operator in the deep neural network model and the tensor layout of the output tensor of the operator in the deep neural network model based on the deep neural network model and the sharding strategy.

11. The method according to claim 10, wherein

the sharding strategy comprises a first sharding strategy and a second sharding strategy;
the determining the tensor layout of the input tensor of each operator in the deep neural network model and the tensor layout of the output tensor of the operator in the deep neural network model based on the deep neural network model and the sharding strategy comprises:

determining a first overall tensor layout corresponding to the first sharding strategy and a second overall tensor layout corresponding to the second sharding strategy, wherein the first overall tensor layout comprises a tensor layout of an input tensor of each operator in the deep neural network model and a tensor layout of an output tensor of the operator in the deep neural network model that are determined based on the first sharding strategy, and the second overall tensor layout comprises a tensor layout of an input tensor of each operator in the deep neural network model and a tensor layout of an output tensor of the operator in the deep neural network model that are determined based on the second sharding strategy; and
the method further comprises:
determining, from the first overall tensor layout and the second overall tensor layout, that the first overall tensor layout comprises the tensor layout of the input tensor of each operator in the deep neural network model and the tensor layout of the output tensor of the operator in the deep neural network model, wherein a sum of communication time and computation time required for training the deep neural network model based on the first overall tensor layout is less than a sum of communication time and computation time required for training the deep neural network model based on the second overall tensor layout.

12. The method according to claim 11, wherein

a cost model of the first overall tensor layout is less than a cost model of the second overall tensor layout, and the cost model of the first overall tensor layout is a value obtained by performing weighted summation based on a size of a data tensor in the first overall tensor layout, a size of a communication tensor in the first overall tensor layout, and a size of a parameter tensor in the first overall tensor layout, and a weight coefficient of the size of the data tensor, a weight coefficient of the size of the communication tensor, and a weight coefficient of the size of the parameter tensor; and
the cost model of the second overall tensor layout is a value obtained by performing weighted summation based on a size of a data tensor in the second overall tensor layout, a size of a communication tensor in the second overall tensor layout, and a size of a parameter tensor in the second overall tensor layout, and a weight coefficient of the size of the data tensor, a weight coefficient of the size of the communication tensor, and a weight coefficient of the size of the parameter tensor.

13. The method according to claim 10, wherein
the sharding strategy is a sharding strategy specified by a user.

**14.** The method according to any one of claims 1 to 13, wherein the input tensor of each operator in the deep neural network model comprises a training dataset, and the training dataset comprises a text dataset, an image dataset, or an audio dataset.

**15.** A computer program product comprising instructions, wherein when the computer program product runs on a computer, the computer is enabled to perform the method according to any one of claims 1 to 14.

Intelligent information chain

Intelligent product and industry application

| Translation/Text analysis/... | Voice/Vision/Image/... |

Data

Data processing:

| Data training/Machine learning/ Deep learning | Searching/ Inference/ Decision-making | ... |

Infrastructure

| Sensor | Intelligent chip | Base platform | ... |

IT value chain

FIG. 1

FIG. 2

EP 4 583 007 A2

FIG. 3

FIG. 4

FIG. 5

Obtain a deep neural network model and a sharding strategy — 601

Determine tensor layouts of each operator based on the deep neural network model and the sharding strategy — 602

Insert a redistribution operator between continuous operators having different tensor layouts — 603

Update a sliced computational graph based on the redistribution operator, and determine an updated sliced computational graph — 604

## FIG. 6

Tensor A

Tensor B

matmul

Tensor C

Table 1: Distributed matrix multiplication

| Tensor | device_matrix | tensor_map | tensor_shape |
|--------|---------------|------------|--------------|
| A | $[D_2, D_1, D_0]$ $D_2 = 3$ $D_1 = 2$ $D_0 = 4$ | [2, 1] | $[h_A, w_A]$ |
| B | | [1, 0] | $[h_B, w_B]$ |
| C | | [2, 0] | $[h_C, w_C]$ |

## FIG. 7

FIG. 8

Determine an equivalent layout tensor_layout_from2 of tensor_layout_from in an extended device matrix and an equivalent layout tensor_layout_to2 of tensor_layout_to in the extended device matrix — 901

Normalize tensor shapes based on tensor_layout_from2 and tensor_layout_to2, and determine tensor_layout_from3 equivalent to tensor_layout_from2 and tensor_layout_to3 equivalent to tensor_layout_to2 — 902

Convert a tensor map based on tensor_layout_from3 and tensor_layout_to3, and determine a communication operator, a slice operator, or a concat operator — 903

Determine a reshape operator — 904

FIG. 9

FIG. 10

| Determine a plurality of overall tensor layouts of a deep neural network model based on candidate sharding strategies | 1101 |

↓

| Determine a target tensor layout from the plurality of overall tensor layouts by using a cost model | 1102 |

FIG. 11

FIG. 12

FIG. 13

FIG. 14

FIG. 15

Neural-network processing unit 50

Instruction fetch buffer 509

Controller 504

Weight memory 502

Operation circuit 503

Accumulator 508

Input memory 501

Vector calculation unit 507

Unified memory 506

Direct memory access controller 505

Bus interface unit 510

Host CPU

External memory

## EP 4 583 007 A2

**Patent documents cited in the description**

- CN 202010231450